# EUROPEAN PATENT APPLICATION

(11) **EP 4 729 976 A1**
(43) Date of publication of application: **22.04.2026**
(21) Application number: 24206683.5
(22) Date of filing: 15.10.2024
(51) Int. Cl.: G01S 7/02, G01S 7/40, G01S 13/931

(54) **DEVICES AND METHODS FOR DETERMINING A RADAR TRANSMISSION AND/OR REFLECTION OF COATINGS**

(71) Applicant: BASF Coatings GmbH, 48165 Münster (DE)
(72) Inventor: KORTE, Simon, 48165 Münster (DE); RODEWALD, Jari, 48165 Münster (DE)
(74) Representative: Coatings IP Association

(57) **Abstract**

The invention relates to the field of determining the transmittance and/or absorption of coated substrates, in particular coated substrates mounted before sensors. The present invention relates to a measurement device for measuring a radar transmission and/or reflection of a vehicle component comprising a coating, a method and computer element for measuring a radar transmission and/or reflection of at least a part of a vehicle component comprising a coating including a repaired coating area and the use of the measurement device for measuring a radar transmission and/or reflection of a vehicle component comprising a repaired coating area.

## Description

### TECHNICAL FIELD

The invention relates to the field of determining the transmittance and/or absorption of coated substrates, in particular coated substrates mounted before sensors. The present invention relates to a measurement device for measuring a radar transmission and/or reflection of a vehicle component comprising a coating, a method and computer element for measuring a radar transmission and/or reflection of at least a part of a vehicle component comprising a coating including a repaired coating area and the use of the measurement device for measuring a radar transmission and/or reflection of a vehicle component comprising a repaired coating area.

### TECHNICAL BACKGROUND

In the field of vehicle repair, it is crucial to measure the radar transmission and reflectance properties of coated articles, such as painted automotive panels, to ensure their compliance with industry standards and regulations. However, determining the radar absorption of vehicle parts, in particular vehicle parts comprising repaired coating area(s), can be challenging, especially when the parts are still attached to the vehicle. Traditional methods involve preparing sample substrates that can be positioned into sample holders of measurement devices, which can be time-consuming, costly, and may not accurately represent the actual radar properties of the coated parts in their installed position.

### SUMMARY OF THE INVENTION

In an aspect the disclosure relates to a measurement system for measuring a radar transmission and/or reflection of a vehicle component comprising a coating, in particular a repaired coating area, the measurement system comprising:
- a handheld device comprising a housing, wherein the housing includes
   ∘ an integrated positioning adjustment mechanism for adjusting the position of a radar target on the vehicle component, wherein the housing further includes
   ∘ a radar transmitter that emits a diverging beam of electromagnetic waves having a wavelength of 1 to 20 mm along a transmission path to the vehicle component,
   ∘ a radar receiver configured to measure the electromagnetic waves reflected from a radar target along a return path
   ∘ a processor connected to the radar transmitter and the radar receiver, wherein the processor is configured to determine radar signal loss data associated with the coating based on the portion of the electromagnetic waves measured by the radar receiver,
- at least one radar target to which the diverging beam of electromagnetic waves from the handheld device is directed, wherein the radar target comprises a mounting mechanism for detachably mounting the radar target to the vehicle component such that the vehicle component is located between the handheld device and the radar target and wherein the radar target is configured to reflect the directed beam of electromagnetic waves to the return path passing back through the vehicle component or configured to absorb the directed beam of electromagnetic waves.

In a further aspect the disclosure relates to a method for measuring a radar transmission and/or reflection of at least a part of a vehicle component comprising a coating, in particular comprising a repaired coating area, the method comprising:
- preparing the coating, in particular the repaired coating area, by applying at least one coating material to an area, in particular a damaged area of the coating, of the vehicle component,
- providing a measurement system of any one of claims 1 to 10 comprising at least one radar target and a handheld device,
- attaching the radar target of the measurement system to the surface of the vehicle component located on the opposite side of the coating by means of a mounting mechanism of the radar target,
- adjusting the position of the radar target on the surface of the vehicle component by means of a positioning adjustment mechanism integrated into the handheld device of the measurement system such that the radar target is present on the opposite side of the handheld device,
- determining radar signal loss data associated with the repaired presence of the coating , in particular the repaired coating area, on the vehicle part by measuring radar transmission through and/or radar reflection from the vehicle part comprising the coating, in particular the repaired coating area, with the handheld device,
- providing the determined radar loss signal data.

In a further aspect the disclosure relates to a use of the measurement system as disclosed herein for measuring a radar transmission and/or reflection of a vehicle component comprising a coating, in particular a repaired coating area.

In a further aspect the disclosure relates to a computer element, such as a computer readable storage medium, a computer program or a computer program product, comprising instructions, which when executed by a computing node or a computing system, direct the computing node or computing system to carry out the steps of the methods as disclosed herein.

In a further aspect the disclosure relates to a computer element, such as a computer readable storage medium, a computer program or a computer program product, comprising instructions, which when executed by the apparatuses or systems as disclosed herein, direct these apparatuses or systems to carry out steps these apparatuses or systems are configured to execute.

Any disclosure, embodiments and examples described herein relate to the measurement systems, methods, the uses and computer elements lined out above and below. Advantageously, the benefits provided by any of the embodiments and examples equally apply to all other embodiments and examples.

### Embodiments

In the following, embodiments of the present disclosure will be outlined by ways of embodiments and/or examples. It is to be understood that the present disclosure is not limited to said embodiments and/or examples.

Sensors that measure distances and warn the driver if the automobile approaches an object have become a new standard. Such sensors may be provided at various parts of the vehicle, for example, behind the radiator grill, the bumper, and the like. It is often desirable to conceal such sensors invisibly behind a trim part, for example a bumper of the vehicle, to reduce the negative impact of such sensors on the overall visual appearance of the vehicle. Since concealment of such sensors results in reduction of the range of the sensor and in a reduced performance of angle-resolving sensors due to reflection of the emitted sensor signal(s) on the trim part and/or due to absorption of the emitted sensor signal(s) by the coating layer(s) present on the vehicle part, it is crucial to ensure a sufficiently high transmission of the vehicle part(s) after the repair process of the coating present on such vehicle part(s). Existing methods are often time-consuming, costly, and require extensive sample preparation resulting in an increased environmental impact of the repair process.

By using a handheld device in combination with a radar target which can be detachably mounted to the repaired vehicle part the need for preparing physical samples containing a substrate and the coating, which can be time-consuming and costly, consumes material and generates waste can be eliminated. This enables a more efficient and cost-effective coating or coating repair process, reducing the environmental impact of coating or coating repair process by reducing the amount of consumed coating material and the amount of generated waste associated with the preparation of physical samples. By using mounting mechanisms on the radar target, such radar target can be easily attached to the vehicle part comprising the coating, eliminating the need for time-consuming and labor-intensive dismounting processes of such part and positioning of the vehicle part in a sample holder of radar transmission and/or reflection measurement devices. This enables a more efficient and streamlined coating or coating repair process, reducing the time and cost associated with the coating process or with repairing damaged coatings and allows to measure the radar reflection and/or transmission of coatings, in particular repaired coating areas, on vehicle parts which are too big to be positioned in a sample holder of common stationary radar transmission and/or reflection measurement devices.

By using a handheld device in combination with the radar target which can be flexibly mounted to the vehicle part by means of the mounting mechanisms the radar transmission and/or reflection of the repaired vehicle part can be flexibly measured at various vehicle parts irrespective of the location of such vehicle part, hence allowing a more flexible measurement process as compared to the use of stationary measurement devices.

By adjusting the radar target using the positioning adjustment mechanisms integrated into the housing of the handheld device a precise control over the positioning of the radar target is achieved, ensuring optimal reflection of the electromagnetic waves along the return path. This enables a more accurate and reliable measurement of the radar signal loss and ensures that the repaired coating area on the vehicle part fulfils given standards and requirements to guarantee proper functioning of the sensor mounted behind such vehicle part despite the presence of a coating on such vehicle part. Reliable and accurate measurement allows to repair vehicle parts while ensuring proper functioning of the sensors mounted behind such vehicle parts, hence avoiding the attachment of new vehicle parts during the coating or coating repair process. This allows to reduce the environmental impact of the repair process by avoiding generation of waste (e.g. damaged or out-of-specification vehicle parts) and/or consumption of materials (e.g. coating materials and substrates required to prepare new coated vehicle parts).

By using a handheld device comprising an integrated positioning adjustment mechanism, a better reproducibility and less susceptibility to errors with respect to the determined radar signal loss data may be achieved by ensuring a constant homogeneity of the emitted diverging beam of electromagnetic waves hitting the vehicle component. The integrated positioning adjustment mechanism further allows to use an electromagnetic positioning adjustment mechanism requiring control via the processor of the handheld device. Use of an electromagnetic positioning adjustment mechanism allows to reliably position the radar target downstream from the location of the coated vehicle component irrespective of the thickness of the coated vehicle component, hence allowing to flexibly use the measurement system on a large variety of vehicle components relation to the measuring device is also possible over larger distances (e.g. due to thicker components). In addition, the alignment of the radar target with respect to the radar transmitter may be reliably controlled based on the field strength of each individual electromagnet contained within the electromagnetic positioning adjustment mechanism, avoiding misalignment of the radar target with respect to the radar transmitter. Misalignment may result in inconsistent transmission and return paths, increased scattering and diffraction of the electromagnetic waves on the return path, reduced signal-to-noise ratio resulting in masking small transmission and/or reflection losses with noise, electromagnetic wave loss due to geometric loss factors leading to incorrect radar signal loss data and reduced reproducibility of the determined radar signal loss data. Hence, reliably controlling the alignment of the radar target with respect to the radar transmitter via the electromagnetic positioning adjustment mechanism may allow to improve the accuracy and reliability of the determined radar loss signal, ensuring that the radar sensors mounted behind coated vehicle components are not negatively influenced by the presence of the coating on the vehicle component due to unreliable radar loss signal data determination.

The measurement system as disclosed herein as well as the methods disclosed herein enable an accurate and reliable measurement of the radar signal loss of vehicle parts comprising a coating, in particular a repaired coating area, without the need for extensive physical sample preparation and/or the need for dismounting of the vehicle part prior to measuring the radar signal loss. This results in a more efficient coating or coating repair process having a reduced environmental impact while at the same time ensuring that the coating or repaired coating area fulfils the standards and requirements to guarantee proper functioning of radar sensor(s) mounted behind such coated vehicle part(s).

Various units, entities, nodes or other computing components may be described as "configured to" perform a task or tasks. Configured to shall recite structure meaning "having circuitry that" performs the task or tasks on operation. The units, circuits, entities, nodes or other computing components can be configured to perform the task even when the unit/circuit/component is not operating. The units, circuits, entities, nodes or other computing components that form the structure corresponding to "configured to" may include hardware circuits and/or memory storing program instructions executable to implement the operation. The units, circuits, entities, nodes or other computing components may be described as performing a task or tasks, for convenience in the description. Such descriptions shall be interpreted as including the phrase "configured to."

In general, the methods, apparatuses, systems, computer elements, nodes or other computing components described herein may include memory, software components and hardware components. The memory can include volatile memory such as static or dynamic random-access memory and/or nonvolatile memory such as optical or magnetic disk storage, flash memory, programmable read-only memories, etc. The hardware components may include any combination of combinatoric logic circuitry, clocked storage devices such as flops, registers, latches, etc., finite state machines, memory such as static random-access memory or embedded dynamic random-access memory, custom designed circuitry, programmable logic arrays, etc.

The radar transmission of the vehicle component comprising the coating, in particular comprising the coating including the repaired coating area, may refer to the portion of the emitted diverging beam of electromagnetic waves which is transmitted from the radar transmitter along the transmission path through the vehicle part comprising the coating. In contrast radar reflection of the vehicle component comprising the coating, in particular the coating including repaired coating area, may refer to the portion of the emitted electromagnetic waves reflected back along the return path to the radar receiver after it has interacted with the coated vehicle component.

The vehicle may be a motor vehicle, such as a car, a van, a minivan, a bus, a SUV (sports utility vehicle), a truck, a semitruck, a tractor, a motorcycle, a trailer, an ATV (all-terrain vehicle), a pickup truck, a heavy duty mover, such as bulldozer, mobile crane and earth mover, an airplanes, boats, ships or other device propelled through space with a motor or engine. The term vehicle includes vehicles propelled by a motor burning fuel for power, and a vehicle propelled by an engine using electricity.

The vehicle component may be a removable component of the vehicle. The vehicle component may be a component attached to the vehicle body. The vehicle component may be a vehicle door, a fender, a bumper, a hood, a boot lid, a mudguard, a roof or the like.

The vehicle component may comprise a coating. The coating may be denoted original coating. The coating may include a repaired coating area. The coating may correspond to a coating being present on the vehicle component before the damage to the coating occurred. The repaired coating area may be a part of the area of the coating, e.g. the repaired coating area may be lower in size than the area of the original coating. The repaired coating area may correspond to the area of the coating, e.g. the area of the repaired coating may have the same size than the area of the original coating.

The repaired coating area (also denoted as repaired coating hereinafter) may denote an area being produced by a repair process on a damaged area of the coating present on the vehicle component. The repaired coating area may include a repaired coating. The repaired coating area may include one or more coating layer(s). The one or more coating layer(s) may include pigmented coating layer(s) and/or transparent coating layer(s). The one or more coating layer(s) may differ from the coating layer(s) present on other areas of the vehicle component (e.g. the original coating). The repaired coating area may be obtained by repairing a damaged coating area (e.g. a coating comprising a damaged area). Repairing a damaged area may include repair of the damaged area being present on a vehicle or a component thereof without recoating the entire coating of the vehicle component and/or the recoating of previously coated surface(s) of the vehicle or a component thereof. Repair of damaged areas may include spot repair. In spot repair, only the damaged area of the coating may be repaired without recoating the entire surface of the vehicle component. Spot repair may be used to repair damage caused by minor accidents or wear and tear. Recoating of previously coated surfaces may include edge-to-edge repair. Edge-to-edge repair may involve repairing or replacing a larger area of the damaged area, such as a fender or door, and may involve removing the existing coating on the vehicle component to obtain the underlying substrate and recoating the underlying substrate.

Detachably mounting the radar target to the vehicle component may refer to the ability to securely attach the radar target to the vehicle component in a manner that allows it to be easily removed or repositioned. The mounting mechanism may include various types of connectors, ferromagnetic materials, clamps, or brackets that allow for detachable mounting.

Handheld device may refer to a portable device that can be held in one or two hands by a user. The handheld device may be a portable device that can be held in one or two hands by a user during determination of the radar signal loss data and/or during measurement of the radar transmission and/or radar reflection of the vehicle component comprising the coating. The handheld device may be a handheld instrument including the housing, the radar transmitter, the radar receiver and the processor. The handheld device may further include a memory storing computer-executable instructions that, when executed by the processor, cause the handheld device to perform one or more operations. The processor may be part of a microcontroller. The operations may include emitting the diverging beam of electromagnetic waves along the transmission part to the vehicle component, measuring the electromagnetic waves reflected from the radar target along the return path and/or determining the radar signal loss data. The handheld device may further include one or more communication interfaces, such as Wi-Fi or Bluetooth, to enable the transfer of data, such as determined radar signal loss data to and/or from another device, such as a remote computer or another portable device, such as a smartphone, laptop or the like. The communication interface may be based on or it supports one or more communication protocols. The communication protocol may a wireless protocol, for example: short distance communication protocol such as Bluetooth^{®}, or WiFi, or long distance communication protocol such as cellular or mobile network, for example, second-generation cellular network ("2G"), 3G, 4G, Long-Term Evolution ("LTE"), or 5G. The communication interface may support any one or more standards and/or proprietary protocols. The handheld device may be associated with a database or other digital entity related to coatings and/or vehicle component(s) and associated measurement data and/or target radar signal loss data. The processor of the handheld device may access this database to determine the measurement data associated with measurements to be performed on the coating or repaired coating and/or to determine target radar signal loss data associated with or related to the vehicle component. The database may include information related to various types of coatings, such as paint, clear coat, and primer, and the corresponding measurement data and target radar signal loss data for each type of coating and/or type of vehicle component.

The housing of the handheld device may include the integrated positioning adjustment mechanism. The positioning adjustment mechanism may be not detachably mounted to the housing, e.g. may not be removable from the housing without destroying the housing. Hence, the positioning adjustment mechanism may not be present on an adapter that may be attachable to the housing but may be part of the housing of the handheld device.

In an embodiment, the radar target includes a surface for reflecting the electromagnetic waves transmitted by the vehicle component comprising the coating, in particular the repaired coating area. In another embodiment the radar target is configured to reflect the electromagnetic waves transmitted by the vehicle component comprising the coating in particular the repaired coating area. The electromagnetic waves reflected by the radar target may pass along the return path through the vehicle component and reach the radar receiver of the handheld device. Hence, the emitted electromagnetic waves may pass 2 times through the vehicle component comprising the coating in particular the repaired coating area. The surface for reflecting the electromagnetic waves may include a coating having reflecting properties (e.g. a reflective coating). The coating may be present on a substrate, such as a flexible or rigid substrate. The substrate may be a polymeric substrate, a metal substrate or a glass substrate. The reflective coating may include a coating comprising one or more metals. The metal(s) may be selected from silver, gold, aluminium, nickel, copper, steel or the like. The reflective coating may be coated with a protective coating to avoid damage to the reflective coating. The radar target may comprise or consist of a reflective material. Examples of reflective materials include metals, such as aluminium or steel, fibreglas, conductive polymer and/or carbon fibers.

In another embodiment the radar target may comprise a retroreflective structure, such as a cube corner structure. This structure may allow to reflect the electromagnetic waves in the direction of the incidence regardless of the orientation of the radar target or the angle of incidence of the emitted diverging beam of electromagnetic waves. In yet another embodiment, the radar target has a surface that diffusely reflects light such that the intensity of the reflected light is the same in all directions, e.g. may be a Lambertian scatterer.

In an embodiment the radar target is present separate from the handheld device. The radar target is hence a separate physical entity with respect to the handheld device. The measurement system thus includes at least two components, namely the radar target and the handheld device. Use of a separate radar target allows to determine the radar signal loss on the vehicle component comprising the coating, in particular the repaired coating, without having to remove such vehicle component for measurement of the radar signal loss or having to prepare a physical sample by applying coating material(s) to a substrate to mimic the coating. By using a separate radar target in combination with a highly portable handheld device, the radar signal loss can be flexible determined, in particular after repairing the coating present on the vehicle part, while avoiding the consumption of resources and the generation of waste material, thus allowing to reduce the environmental impact associated with the coating or the coating repair process.

In an embodiment the return path is antiparallel to the transmission path to the vehicle component. This way, the intensity of the electromagnetic waves reflected from the radar target along the return path may be maximized, ensuring accurate and reliable determination of the radar signal loss data based on the measured electromagnetic waves reflected from the radar target along the return path.

In an embodiment the electromagnetic waves are radar waves. In an embodiment the electromagnetic waves have a wavelength of 1.5 to 15 mm, a wavelength range of 15 mm to less than 4.1 mm or a wavelength range of 3.5 to 4.1 mm or a wavelength range of 2 to 3 mm.

In an embodiment the radar transmitter and the radar receiver are contained within a single transceiver unit. The transceiver unit may be electrically connected to a circuit board comprising the processor. The transceiver unit may be configured to emit and receive the electromagnetic waves. This way, a more compact design of the handheld device can be achieved while ensuring a retroreflective measurement geometry of the electromagnetic waves.

In an embodiment the mounting mechanism and/or the positioning adjustment mechanism includes one or more ferromagnetic material(s). The ferromagnetic material may be selected from iron, nickel, cobalt and alloys thereof. Use of ferromagnetic materials as mounting mechanism allows to attach the radar target to the surface of the vehicle component comprising the coating, in particular the repaired coating, and to detach the radar target without destruction of the vehicle component and/or the radar target upon completion of the measurement in an easy and reliable manner. Use of ferromagnetic materials as positioning adjustment mechanism allows to position the radar targets by means of the handheld device, hence ensuring that the radar target is positioned on the opposite side of the coating to reliably determine the radar signal loss associated with the coating. Moreover, the radar target can be held in place by the handheld device. Hence the radar target may be reliably positioned on the opposite side of the coating irrespective of the position of the coating on the vehicle part and irrespective of the substrate of the vehicle part (e.g. the radar target can also be attached to nonmagnetic substrates, such as plastic substrates). This ensures that radar signal loss data associated with the coating can be reliably determined irrespective of the position of the coating on the vehicle component without having to remove the vehicle component for measurement or without having to prepare a physical sample mimicking the coating for determining the radar signal loss data associated with the coating.

In an embodiment the positions of the mounting mechanism of the radar target match the positions of the positioning adjustment mechanism integrated into the housing of the handheld device. This may ensure that the radar target can be reliably positioned as required on the opposite side of the coating, in particular the repaired coating, by means of the handheld device, such that the vehicle component comprising the coating is located between the handheld device and the radar target. Hence, the radar target can also be positioned without requiring access to vehicle component, allowing to determine the radar signal loss data of the coating via the handheld device on positions of the vehicle component where the side of the vehicle component being opposite of the coating is not accessible or is hard to access. This allows to avoid demounting of vehicle components for the determination of the radar signal loss data and/or the preparation of physical samples mimicking the coating for determining the radar signal loss data.

In an embodiment the mounting mechanism is positioned at one or more locations on the radar target, in particular at one or more position(s) around the edges of the radar target. This may ensure reliable mounting of the radar target to the vehicle component on the opposite side of the coating, in particular the repaired coating, ensuring reliable and accurate determination of the radar signal loss data. This way, the radar target may also be reliably attached to non-flat vehicle components, allowing reliable and accurate determination of the radar signal loss data irrespective of the form of the vehicle component comprising the coating. The measurement system may include different radar targets to account for different geometries of the vehicle components comprising the repaired coating. For instance, the measurement system may comprise a flexible radar target, e.g. a radar target comprising a flexible substrate that can adapt to curves present within the vehicle component, and a rigid radar target, e.g. a radar target comprising a rigid substrate.

In an embodiment the positioning adjustment mechanism integrated into the housing of the handheld device is configured to position the radar target on the opposite side of the coating, in particular the repaired coating. The radar target may be moved along the side of the vehicle component being opposite of the coating by means of the handheld device. For instance, the mounting mechanism and the positioning adjustment mechanism may be complementary to each other to allow movement of the radar target via movement of the handheld device. This may allow to reliably position the radar target on the opposite side of the coating to ensure reliable and accurate determination of the radar signal loss data.

In an embodiment the positioning adjustment mechanism integrated into the housing of the handheld device comprises one or more electromagnet(s). The electromagnet may include a coil of wire that generates a magnetic field through the flow of electric current in the coil of wire. The coil may be wound around a core made of ferromagnetic materials to enhance the magnetic field strength. In contrast to ferromagnetic materials, the magnetic field may be turned on and off or adjusted via the electric current. By adjusting the magnetic field of the electromagnet(s), the radar target may be mounted or dismounted from the vehicle component in a reliable yet simple manner. In addition, the alignment of the radar target with respect to the handheld device and hence the radar transmitter included therein may be reliably controlled based on the field strength of each individual electromagnet contained within the positioning adjustment mechanism, avoiding misalignment of the radar target with respect to the radar transmitter and allowing to improve the accuracy and reliability of the radar loss signal data determination. Use of electromagnets moreover allows to reliably attach the radar target downstream of the vehicle component irrespective of the thickness of the vehicle component since the field strength of the electromagnets can be adjusted to the thickness of the component.

In an embodiment the radar target comprises a radar reflector that reflects the electromagnetic waves that reach the radar reflector in a transmission mode of the handheld device and/or a radar absorber that absorbs the electromagnetic waves that reach the radar absorber in a reflection mode of the handheld device. Examples of radar absorbers include carbon foams or lossy foam absorbers. The radar absorber may be configured to absorb the electromagnetic waves that reach the radar absorber during operation in a reflection mode of the handheld device.

In an embodiment the radar transmitter emits electromagnetic waves in a frequency range of 20 GHz to 160 GHz, in particular at a frequency range of 20 GHz to less than 74 GHz or a frequency range of 74 GHz to 85 GHz or a frequency range of 100 to 140 GHz. Such frequency range may correspond to the frequency range used by radar sensors mounted behind vehicle components. Use of such frequency range may allow to determine the radar signal loss data under operation conditions of the respective radar sensor. This allows to ensure the proper functioning of the radar sensor despite the presence of the coating on the vehicle component mounted before the radar sensor.

In an embodiment the housing of the handheld device further comprises a display configured to display the radar signal loss data determined by the processor. The display may be present within the housing. The display may be attached to the housing. The display may be configured to display data received from the processor. The display may comprise an interaction element to facilitate user interaction with the display device. The interaction element may be a physical interaction element, such as an input device or input/output device, in particular a mouse, a keyboard, a trackball, a touch screen or a combination thereof. The interaction element may be used to provide input data or to initiate the measurement. The display may further be configured to display data associated with the verification of the orientation of the radar target with respect to the handheld device. This may allow to ensure that the radar signal loss data is determined reliably and accurately since a wrong orientation of the radar target may lead to incorrect results concerning the determined radar signal loss data.

In an embodiment the at least one coating material applied to the area of the coating is determined by
- providing sample coating material data associated with a coating present adjacent to the area,
- providing candidate coating material data associated with candidate coating material(s), wherein the candidate coating material data includes candidate color data and candidate radar signal loss data,
- selecting - based on the provided sample coating material data - coating material data from the candidate coating material data by matching the provided sample color data with the candidate color data,
- providing the selected coating material data.

The sample coating material data may include color data. The color data may include reflectance data, color space data, such as CIEL*a*b* values or CIEL*C*h* values, gloss data, texture parameters, such as texture characteristics and/or coarseness characteristics, or a combination thereof.

The sample coating data may be provided by determining such sample coating data using measurement device(s) configured to determine such color data. For instance, color data, such as reflectance data, associated with the coating present on the vehicle component may be determined using a multi-angle spectrometer. Color space data, e.g., CIEL*a*b* values, may be calculated from the acquired reflectance data and the radiation function of the light source (see for example, ASTM E2194-14 (2017) and ASTM E2539-14 (2017). Texture parameters may be determined from texture images acquired under defined light conditions and at defined angles. The texture parameters may be calculated from the obtained images. Examples of such calculated texture parameters include the textural values G diffuse or Gdiff (so called graininess or coarseness or coarseness value or coarseness characteristic) which describes the coarseness characteristics of a coating layer under diffuse illumination conditions, Si (sparkle intensity), and Sa (sparkle area) which describe the sparkle characteristics of a coating layer under directional illumination conditions, as introduced by the company Byk-Gardner ("Den Gesamtfarbeindruck objektiv messen", Byk-Gardner GmbH, JOT 1.2009, vol. 49, issue 1, pp. 50-52). The texture parameters introduced by Byk-Gardner may be determined from gray scale images. It is also possible for texture parameters to be determined from color images, as e. g. introduced by the company X-Rite with the MAT6 or MA-T12 multiangle spectrophotometers.

Candidate coating material data may be associated with pigmented candidate coating material(s), e.g. coating material comprising one or more pigments. Pigments may be selected from color pigment(s) and/or effect pigment(s). Candidate coating material data may include a candidate coating material identifier(s), formulation data associated with the formulation of the respective candidate coating material, data associated with further coating materials being compatible with the respective candidate coating material or combinations thereof. The identifier may include a unique ID, a color name, a color number, a color code, a bar code, or a combination thereof. Data associated with further coating materials being compatible with the respective candidate coating material may include data associated with clearcoat materials being compatible with the respective candidate coating material, such as clearcoat identifier(s), formulation data associated with the respective compatible clearcoat material(s) or a combination thereof.

Candidate coating material data may be stored on a database. The database may be accessible by the computing device performing the color matching operation (e.g. the selection of the coating material data from the candidate coating material data). The computing device performing the color matching operation may be a stationary computing device located within the repair facility performing a repair process on the damaged coating of the vehicle part. The computing device may be accessible via a communication interface by the repair facility or technician performing the repair process. For instance, the computing device may be a server comprising a memory containing executable code configured to access the database storing the candidate coating materials and to select coating material data from such candidate coating material data based on received sample coating material data.

Matching the provided sample color data with the candidate color data may include determining matching candidate color data by determining the distance between the sample color data and the candidate color data and comparing the determined distance to predefined thresholds. Matching the provided sample color data with the candidate color data may include calculating color difference value(s) between CIEL*a*b* values included in the sample coating data and CIEL*a*b* values included in the candidate color data, and comparing the determined color difference value(s) to predefined threshold(s). Coating material data may be determined using a data driven model parametrized on historical color data, in particular CIEL*a*b* values, and historical color difference values. Such models are described, for example, in US 2005/0240543 A1. Color difference value(s) may be determined using commonly known color tolerance equation(s), such as the CIE94 color tolerance equation, the CIE2000 color tolerance equation, the DIN99 color tolerance equation or a color tolerance equation described in WO 2011/048147 A1.

The selected coating material data may include formulation data indicating the formulation of the coating material. The formulation data may be used to prepare the respective coating material associated with the selected coating material data.

The determined coating material data may be provided for display. The selected coating material data may be provided via a communication interface for monitoring and/or controlling the production of the coating material associated with the selected coating material data. For example, the selected coating material data may be provided to a mixing device configured to prepare coating material(s) based on formulation data included in received coating material data. The prepared coating material(s) may include opaque coating material(s), such as pigmented basecoat material(s), and/or transparent coating material(s), such as clearcoat material(s).

The coating material(s) may be prepared according to the selected coating material data. The prepared coating material(s) may be applied to the damaged area of the vehicle component. Prior to application of the selected coating material(s), the damaged area may be pretreated. This may include sanding the damaged area to remove at least a part of the damaged coating. This may further include applying a filler coating material, curing the applied filler coating material and sanding the formed filler coating layer. Use of a filler coating material may improve the adhesion of the repaired coating to the underlying substrate of the vehicle component. In addition, use of the filler may allow to level out defects of the substrate to provide a smooth surface for application of the prepared coating materials. Application of coating material(s), such as the filler coating material and the prepared coating material(s) may be performed via spray application processes known in the state of the art. Such application processes may include electrostatic spray application and/or pneumatic spray application. The coating material(s) may be applied via spray guns operated by robot(s) and/or human operators. The prepared coating material(s) may be applied to the damaged area or the pretreated area. If more than one prepared coating material is to be applied, the prepared coating materials may be applied successively. For instance, the prepared basecoat material may be applied to the sanded filler layer followed by application of the prepared clearcoat material. The applied coating material(s) may be dried and/or cured. Curing may be performed after application of each coating material. Curing may be performed after application of at least two coating material(s). Curing may be performed at elevated temperatures, for example at 25 to 80°C. After curing of the applied coating material(s), the repaired coating may be obtained on the surface of the vehicle part.

In an embodiment determining the radar loss signal data includes
- directing the diverging beam of electromagnetic waves having a wavelength of 1 to 20 mm from a radar transmitter of the handheld device along the transmission path towards the radar target,
- measuring a portion of the electromagnetic waves reflected from the radar target along the return path with a radar receiver of the handheld device, and
- determining the radar signal loss data by a processor of the handheld device based on the portion of the electromagnetic waves measured by a radar receiver of the handheld device.

Directing the diverging beam of electromagnetic waves along the transmission path towards the radar target may be triggered by a user using the handheld device. The user may initiate the measurement, for example upon validation of the orientation of the radar target. Initiating the measurement may include directing the diverging beam of electromagnetic waves from the handheld device along the transmission path to the radar target.

The radar signal loss data may be determined as a percentage of the electromagnetic waves emitted by the radar transmitter of the handheld device. The radar signal loss data may represent the difference between the emitted electromagnetic waves and the electromagnetic waves measured by the radar receiver. The radar signal loss data may be determined as a percentage of the electromagnetic waves received by the radar receiver and reference electromagnetic waves. The reference electromagnetic waves may correspond to electromagnetic waves received by the radar receiver in the absence of a coated substrate being present between the radar transmitter and the radar target.

The radar loss signal data may be determined at a frequency range of 20 GHz to 200 GHz, in particular at a frequency range of 20 GHz to less than 74 GHz or a frequency range of 74 GHz to 85 GHz or a frequency range of 100 to 150 GHz.

In an embodiment, the method further includes a step of validating an orientation of the radar target with respect to the handheld device, in particular with respect to the radar transmitter and/or radar receiver included in the handheld device. Validating the orientation of the radar target with respect to the handheld device ensures reliable and accurate determination of the radar signal loss data since the radar signal loss data is depending at least in part on the reflection of the electromagnetic waves from the radar target along the return path to the radar receiver. Ensuring correct orientation of the radar target hence allows to ensure that the determined radar signal loss data is reflecting the actual radar signal loss due to the presence of the coating on the vehicle component, avoiding incorrect measurement data and hence malfunction of the radar sensor due to the presence of a coated component associated with a radar transmission and/or absorption above threshold value(s) for ensuring proper functioning of the radar sensor.

The orientation of the radar target with respect to the handheld device may be validated by measuring field strength of a magnetic field produced by electromagnets of the positioning adjustment mechanism integrated into the housing of the handheld device and/or by measuring the strength of the electromagnetic waves measured by the radar receiver. The orientation of the radar target may be validated by the processor included in the handheld device. The orientation of the radar target may be validated if the magnetic field strength for each electromagnet of the positioning adjustment mechanism is not deviating, in particular significantly deviating, from the magnetic field strength of the other electromagnets. A significant deviation may include a deviation of the magnetic field strength of one electromagnet with respect to the magnetic field strength of other electromagnets of more than 0.5% or more than 1% or more than 2% or more than 3% or more than 5% or more than 10%. The processor of the handheld device may be configured to measure the magnetic field strength and to compare the measured magnetic field strength. The measurement device may include one or more sensor(s) configured to measure the magnetic field strength, such as Hall effect sensor(s) positioned around the electromagnets. These sensors may produce a voltage proportional to the magnetic field strength when exposed to the magnetic field of the respective electromagnet. The voltage produced by the Hall effect sensor(s) may be converted to a digital signal using an analog-to-Digital Conversion (ADC) present within the handheld device. The processor of the handheld device may be configured to determine magnetic field strength value(s) based on the digital signals and calibration data associated with the sensor(s). Verification of the orientation of the radar target may ensure reliable positioning of the radar target with respect to the radar transmitter of the handheld device if the orientation cannot be controlled by visible inspection due to the location of the coated component on the automotive. By using electromagnetic positioning adjustment mechanism integrated into the housing of the handheld device, the radar target can be reliably positioned downstream of the coated component irrespective of the location and thickness of the coated component on the automotive while ensuring correct alignment of the radar target with the radar transmitter of the handheld device. This way, the reliability and accuracy of the determined radar signal loss data may be improved, avoiding incorrectly determined radar signal loss data due to incorrect orientation of the radartarget and hence reducing the malfunction of the radar sensor due to the presence of a coating on the component mounted before the sensor. This is especially important for repair processes since it needs to be ensured that the repaired coating does not negatively influence the function of the radar sensor. The strength of the received electromagnetic waves being below a given threshold may indicate a wrong orientation of the radar target. The processor may be configured to compare the strength of the received electromagnetic waves to predefined threshold value(s).

The orientation of the radar target may be validated if the radar target is oriented in a 90 degree angle with respect to the emitted diverging beam of electromagnetic waves. The orientation of the radar target in a 90 degree angle with respect to the emitted diverging beam of electromagnetic waves may be validated as previously described.

The orientation of the radartarget may be validated if the radar signal loss data is above a given threshold value. The orientation of the radar target may be validated if the reflected electromagnetic waves is above a given threshold value. The threshold value may define a minimum value and/or a maximum value. The threshold value may be a percentage of the measured electromagnetic waves.

Message data indicating incorrect orientation of the radar target may be generated and provided if the orientation of the radar target is not validated. The message data may be generated by the processor of the handheld device. The message data may be provided for display, for example for display on a display contained in the housing of the handheld device.

The position of the radar target on the surface of the vehicle may be adjusted by means of the position adjustment mechanism integrated into the housing of the handheld device if the orientation of the radar target is not validated. The position may be adjusted by a user in response to receiving a message indicating incorrect orientation of the radar target. The message may be displayed on the display of the handheld device. The position may be adjusted by moving the handheld device with respect to the radar target.

In an embodiment, the method further includes the steps of
- providing coating material data associated with the one or more coating material(s) applied to the area of the vehicle component, wherein the coating material data includes color data and radar signal loss threshold(s) and/or reflection threshold(s),
- comparing the determined radar signal loss data with the provided radar signal loss threshold(s).

The further step may be performed by the processor of the handheld device. The further step may be performed by another computing device being separate from the handheld device. The handheld device may be configured to provide the determined radar signal loss data to such further computing device. The further computing device may be configured to gather determined radar signal loss data from the handheld device. For instance, the further computing device may be configured to gather determined radar signal loss data from the handheld device upon receiving a coating material identifier associated with the coating material data.

The coating material data may be provided by providing a coating material identifier associated with the coating material data. The coating material identifier may include any identifier uniquely associated with the respective coating material. The identifier may include a unique ID, a color name, a color number, a color code, a bar code, or a combination thereof. The coating material data may further include formulation data associated with the formulation of the respective coating material. The coating material data may be provided by gathering such coating material data in response to receiving one or more coating material identifier(s). The coating material data may be gathered from the database by matching received coating material identifier(s) with coating material identifier(s) stored in such database. The coating material data may be gathered by the computing device performing the comparison of the determined radar loss.

Radar loss signal threshold(s) may include one or more data point(s) indicating thresholds with respect to acceptable radar signal loss. The threshold(s) may be associated with standards or requirements associated with the respective radar sensor. For instance, the threshold(s) may be derived from such standards and/or requirements.

Comparing the determined radar loss data with the provided threshold(s) may include assigning the determined radar signal loss data to the coating material data and data associated with the production of the coating prior to comparing the determined radar loss data with the provided threshold(s). Data associated with the production of the coating may include the production ID associated with the production of the coating area.

Comparing the determined radar signal loss data with the provided threshold(s) may include classifying the determined radar signal loss data using a classifier. The classifier may be a binary classifier discriminating between acceptable radar signal loss and non-acceptable radar signal loss. The determined radar signal loss data may be classified into acceptable or not acceptable via such classifier. Comparing the determined radar signal loss data with the provided radar signal loss threshold(s) may allow to determine whether the determined radar signal loss data is acceptable, e.g. whether the radar signal loss associated with such determined radar signal loss data is acceptable. The result of the classification may be provided. Providing the result of the classification may include providing the result of the classification for display. Providing the result of the classification may include providing the result of the classification to a database for storage.

Message data may be generated and provided if the determined radar loss signal data is below at least one of the provided radar signal loss threshold(s). The message data may be generated and provided by the computing system performing the comparison of the determined radar signal loss data with the provided radar signal loss threshold(s). Message data may include the result of the comparison of the determined radar signal loss data with the provided radar signal loss threshold(s). The message data may include a classifier signifying the determined radar signal loss data as acceptable or non-acceptable. Message data may include the determined radar signal loss data, provided radar signal loss threshold(s) and the result of the comparison. Providing the message data may include providing the message data for display. Providing the message data may include providing the message data via a communication interface or API to another computing system being separate from the computing system generating the message data. Upon receipt of such message data, one or more actions may be initiated. The receipt of such message data may trigger one or more actions. The one or more actions may be predefined actions. The one or more actions may include determining target coating material data associated with radar signal loss data above the provided radar signal loss threshold(s) as described in the following. The radar signal loss data may be determined using one or more data driven model(s) or may be measured radar signal loss data. The one or more actions may include initiating a further measurement to determine whether the first measurement was performed correctly or not.

Target coating material data associated with target coating material(s) may be determined based on provided coating material data associated with the coating present on the vehicle component if the determined radar loss signal data is below at least one provided radar signal loss threshold. The target coating material data may be associated with radar signal loss data being above at least one provided radar signal loss threshold. The target coating material data may be associated with target color data matching the provided color data, e.g. the difference between the target color data and the provided color data may be below a predefined threshold value. This may ensure that coatings prepared from such target coating material(s) match the appearance of the coating present on the vehicle component or vehicle to avoid any visual differences in the appearance after repair of the vehicle component. The target coating material data may be determined by the computing device performing the comparison of the determined radar signal loss data with the provided radar loss signal threshold(s). The target coating material data may be determined by the computing device performing the comparison of the determined radar signal loss data with the provided radar loss signal threshold(s).

Determining the target coating material data may include:
- providing candidate coating material data associated with candidate coating material(s), wherein the candidate coating material data includes candidate color data and candidate radar signal loss data,
- selecting - based on the provided coating material data - target coating material data from the candidate coating material data by matching the provided color data with the candidate color data under the constraint of the radar signal loss threshold(s) included in the provided coating material data,
- providing the selected target coating material data.

The candidate coating material data may be stored in a database as previously described. Matching of the provided color data with the candidate color data may be performed as previously described. Color difference value(s) may be determined for matching candidate coating data as previously described. Target coating material data may be selected by comparing radar signal loss data included in matching candidate coating data with the radar signal loss threshold(s) included in the provided coating material data and selecting target coating material data associated with radar signal loss data above at least one of the provided radar signal loss thresholds.

The selected target coating material data may be provided for display. The selected target coating material data may be provided via a communication interface for monitoring and/or controlling production of the target coating material based on such target coating material data.

Determining target coating material data may allow to identify further coating materials which can be used to repair the damaged coating on the vehicle component such that the repaired coating fulfils given requirements and/or specifications concerning the absorption and/or reflection of radar signals by such repaired coating. This allows reliable repair of damaged coatings on vehicle components mounted before radar sensors while ensuring proper functioning of the radar sensors after repairing the damaged coating.

### BRIEF DESCRIPTION OF THE SEVERAL VIEWS OF THE DRAWINGS

In the following, the present disclosure is further described with reference to the enclosed figures. The same reference numbers in the drawings and this disclosure are intended to refer to the same or like elements, components, and/or parts. The description of drawings is provided for illustrative purposes and shall not be considered limiting. The embodiments and examples are illustrative embodiments and examples to further line out the concepts lined out herein. The figures include schematic illustrations and shall not be considered limiting. Other embodiments and examples that fall under the concepts lined out herein are possible and may not be explicitly described herein.
- FIG. 1A: illustrates schematically an example process for repairing a damaged coating present on a vehicle component mounted before a radar sensor.
- FIG. 1B: is a schematic illustration of a perspective sectional view of a repaired coating area resulting from the example repair process illustrated in FIG. 1A.
- FIG. 2A: illustrates schematically an example of a measurement system for measuring a radar transmission and/or reflection of at least a part of a vehicle part comprising a coating.
- FIG. 2B: illustrates a front view of an example handheld device of the measurement system illustrated in FIG. 2A
- FIG. 3: is a schematic diagram of the handheld device illustrated in FIG. 2A.
- FIG. 4A: illustrates a perspective view of an example measurement setup for measuring a radar transmission and/or reflection of at least a part of a vehicle part comprising a coating using the measurement system illustrated in FIG. 2A.
- FIG. 4B: illustrates a further perspective view of an example measurement setup for measuring a radar transmission and/or reflection of at least a part of a vehicle part comprising a coating using the measurement system illustrated in FIG. 2A.
- FIG. 4C: illustrates schematically an example measurement process for measuring a radar transmission and/or reflection of at least a part of a vehicle part comprising a coating with the measurement system illustrated in FIG. 2A.
- FIG. 5: illustrates a flow chart of an example of a method for measuring a radar transmission and/or reflection of at least a part of a vehicle part comprising a coating.
- FIG. 6: illustrates a flow chart of a further example of a method for measuring a radar transmission and/or reflection of at least a part of a vehicle part comprising a coating.
- FIG. 7: illustrates a flow chart of a further embodiment of the methods described in FIG. 5 and FIG. 6.
- FIG. 8: illustrates a schematic drawing of an example of an apparatus that may be used to implement the method described in FIG. 7 in accordance with an example embodiment of the present disclosure.

### DETAILED DESCRIPTION

The following embodiments are mere examples for implementing the methods, the systems or the computer elements disclosed herein and shall not be considered limiting.

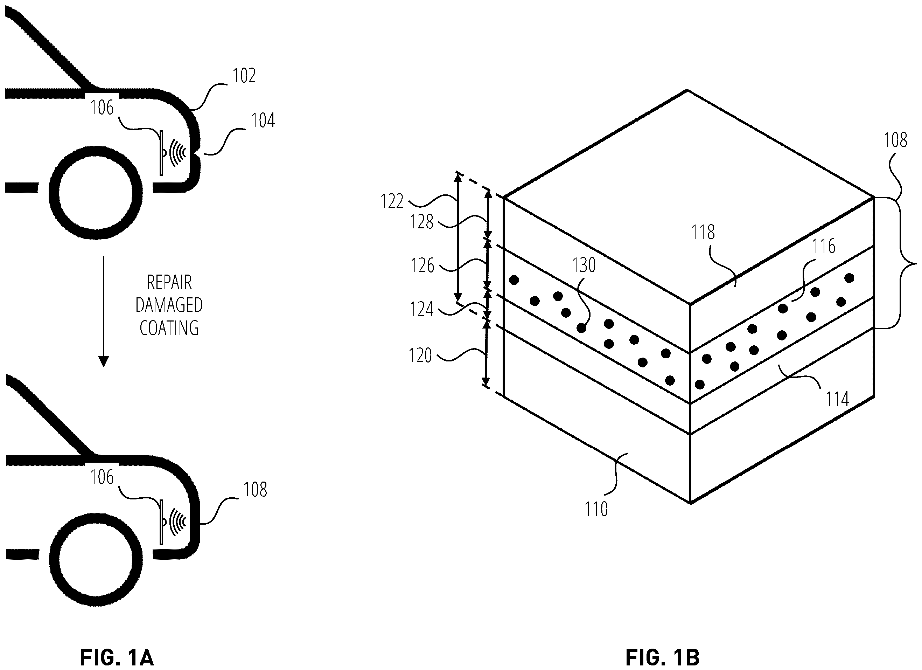

FIG. 1A illustrates schematically an example process for repairing a coating comprising a damaged coating area and being present on a vehicle component mounted before a radar sensor. The damaged area may comprise one or more coating layer(s). The damage may affect the coating, in particular one or more coating layer(s) present in such coating. The damage may affect the coating and the underlying substrate. The vehicle may include any vehicle propelled by a combustion engine and/or an electric engine. The vehicles may include land vehicles. The vehicle may include ships and/or boats. The vehicle may include air vehicles. The vehicles may include automotives. The vehicle may include cars.

In the example of FIG. 1A, the damaged coating area 104 is present on a bumper 102. However, the damaged coating area 104 may be present on other vehicle components, such as the hood, the doors, the lid, the roof or the like. The damaged coating area 104 may be present on the vehicle part mounted in front of a radar sensor 106. The damaged coating area 104 may be present on the vehicle component at the height of the radar sensor 106.

Repair of the damaged coating area 104 may involve a spot repair process or an edge to edge repair process. The repair process may begin with masking areas of the vehicle component around the damage. This allows to safeguard areas not intended for painting and seals off those sections, preventing any unintended spillage, splashes, or sprays from damaging or marring them. Special masking tapes or other materials resistant to paint and solvents may be used for this purpose. Prior to masking, other vehicle components may be disassembled to allow better access to the damaged coating.

Following masking, surface preparation may be performed. In this step, the damage may be thoroughly cleaned and readied. Any dust, oil, or other contaminants may be removed from the damage to ensure that the coating material(s) used to repair the damage adhere properly to the underlying substrate. Surface preparation might involve processes like degreasing, abrasion by sanding, or chemical treatments, depending on the specifics of the damage and the repair. Surface preparation may involve removing at least a part of the coating layers affected by the damage.

Surface preparation may be followed by application of a primer coating material. The primer coating material may be a primer coating material and/or a primer-surfacer coating material. The formed primer layer may serve as an intermediary between the raw surface and the layers formed from subsequently applied coating material(s). The primer layer may help to hide any imperfections or blemishes on the surface and may enhances the adhesion of the following layers. The primer coating material may include corrosion inhibitive pigments to protect the substrate from corrosion, oxidization, and other environmental damages. The applied primer coating material may be dried and/or cured. Afterwards, a sandable primer-surfacer may be applied and dried and/or cured. Curing of the primer and/or primer-surfacer may be performed at room temperature or at temperatures of less than 100 °C to avoid any damage to the vehicle or parts thereof. The primer-surfacer may allow to improve intercoat adhesion and may provide sufficient stone chipping resistance to the resulting coating.

The cured primer layer or the cured primer-surfacer layer may be treated by sanding. Sanding may allow to smooth the formed coating layer and to rectify any irregularities or rough spots. This may ensure a smooth base for the subsequent application of the basecoat coating material. Different grades of sandpaper may be used, starting from coarse to fine, to achieve a perfectly smooth surface.

After sanding, a basecoat material may be applied to the sanded primer layer or primer-surfacer layer. The basecoat material may be a coating material comprising at least one color pigment and/or at least one effect pigment. Examples of color pigments include inorganic and organic color pigments. Inorganic color pigments may include natural and synthetically produced pigments based on inorganic compounds and includes white pigments, inorganic colored pigments and black pigments. Organic color pigments are practically insoluble in the application medium and may include azo pigments and polycyclic pigments, i.e. organic non-azo pigments characterized by at least one aromatic and/or heteroaromatic ring system. Examples of effect pigments include luster pigments, such as metal effect pigments, pearlescent pigments and interference pigments, flaky graphene, flaky iron oxide and micronized titanium dioxide. The basecoat material may further comprise at least one binder and at least one solvent. The solvent may be organic solvent(s) and/or water. The basecoat material may further comprise at least one crosslinking agent which may react with functional groups present in the binder(s). The basecoat material may be liquid under application conditions, e.g. during application to the sanded primer layer or primer-surfacer layer. The basecoat material may be solid under application conditions. The basecoat material may be prepared by mixing one or more pigment formulation(s) with a pigment free formulation and optionally a crosslinker component. The pigment formulation(s) may include one or more color or effect pigment(s) and a binder. The pigment formulation(s) may further include a solvent. The pigment free formulation may contain a binder, solvent(s), a rheology modifier and optionally a crosslinking agent. The rheology modifier may include an inorganic and/or organic thickening agent. The crosslinking component may include at least one crosslinking agent. The composition of the basecoat material may be determined by performing color matching operations known in the state of the art. Briefly, the appearance (e.g. the color and/or texture) of area(s) adjacent to the damage is determined, for example using a spectrophotometer. The determined color data and/or texture data is used to determine a best matching coating material formulation from a plurality of candidate coating formulations, for example using color matching algorithms known in the state of the art. Each candidate coating formulation may be associated with a mixing formula which signifies the amounts of pigment formulation(s), pigment free formulation and optionally crosslinker component to be mixed to achieve the candidate coating formulation. The basecoat material may be prepared based on a mixing formula associated with a determined best matching coating formulation. The prepared basecoat material may be applied in one or more layers, for example via commonly known spray application methods, such as pneumatic spray application or electrostatic spray application. Application of the basecoat material in several layers allows to attain the desired depth of color and uniformity. The applied basecoat material(s) may be dried and/or cured. The formed basecoat layer may match in appearance to the adjacent coating areas such that the repair is not visible to the eye of the human observer, hence allowing to achieve a uniform appearance of the coating after repair.

A clearcoat material may be applied to the dried and/or cured basecoat layer. The clearcoat material may be applied by spray application as previously described. The clearcoat material may be transparent (e.g. may not contain any pigments or may only contain transparent pigments) or semi-transparent (e.g. may contain pigments in a concentration which do not fully hide the underlying basecoat layer). The layer produced from the clearcoat material may provide a protective coating against environmental effects, corrosion, and UV light degradation, promote unmatched color retention, and provide a smooth, unblemished, and even finish. Clearcoat materials applied in clearcoat application may include solid (e.g. powder) or liquid (e.g. waterborne or solventborne) clearcoat materials. Clearcoat materials may include 1K materials (e.g. materials not prepared by mixing 2 separate components) and 2K materials (e.g. materials prepared from mixing a binder component with a hardener component). 1K materials may include acrylic melamine clearcoats typically based on a combination of acrylic polyols (Ac) and amino cross-linking agents (MF, melamine resins) and 1K poylurethane clearcoats. 2K materials include 2K polyurethane clearcoats and 2K epoxy acid clearcoats. The applied clearcoat material may be dried and/or cured.

After curing of the clearcoat material, a repaired coating 108 may be obtained. The repaired coating 108 may correspond to at least a part of the area of the coating present on the vehicle component. The repaired coating 108 may be present on a substrate forming the vehicle component.

With reference to FIG. 1B, the repaired coating 108 may include one or more coating layers, such as a primer coating layer 114, a pigmented coating layer 116 (e.g. basecoat layer), and a clearcoat layer 118. Any of the primer, pigmented coating layer, or clearcoat 114, 116, 118 may be applied with one, two, or more layers, each. For example, if the desired clearcoat layer 118 is applied in two layers, the combined two layers may be considered the desired clearcoat layer 118. Other optional coating layers may also be present in some embodiments, such as a sealer, surfacer, adhesion promotor, midcoat, etc. The primer layer 114, the basecoat layer 116 and the clearcoat layer 118 may each be associated with a layer thickness 124, 126, 128. The layer thickness may correspond to the dry layer thickness of the respective coating layer. The sum of the layer thicknesses of the layers of the coating may correspond to the thickness 122 of the coating. The coating may further be associated with a permittivity, such as a relative permittivity value. The permittivity of the coating may be derived from the permittivity of each coating layer present within the coating. The permittivity of the repaired coating 108 may influence the radar transmission and/or reflection of such repaired coating. For instance, if the permittivity of the repaired coating 108 is significantly different from that of the air, a part of the radar signal emitted by the radar sensor 106 will be reflected back and will not pass through the vehicle component, hence significantly decreasing the sensitivity of the radar sensor 106 mounted behind the vehicle component 102. Likewise, if the repaired coating 108 has a high permittivity and is also conductive, it may absorb the radar signal emitted from radar sensor 106. Due to reflection and/or absorption of the emitted radar signal by the vehicle component comprising the repaired coating 108, the emitted radar signal may be dampened. If the dampening effect is too large, the amount of radar signal passing through the vehicle component is too small to allow reliable detection of objects present in front of the vehicle by the radar sensor 106. Hence, coatings present on vehicle components mounted before radar sensors are optimized with respect to their permittivity to ensure that sufficient radar waves pass through the coated component. The same holds true upon repairing such coated vehicle components. Since the coating material(s) used during repair differ from the coating material(s) used during production of the vehicle, the radar transmission of the coating resulting from the repair process (e.g. the repaired coating 108) must be determined to ensure that the repaired coating still allows sufficient transmission of emitted radar waves to avoid malfunction of the radar sensor 106 during operation of the vehicle.

The substrate 110 may be associated with a substrate material, a substrate thickness 120, and optionally other possibilities such one or more substrate additives, or a shape. The substrate material may be selected from plastic substrate material(s), metal substrate material(s) and substrate materials comprising metal material(s) and plastic material(s). Plastic substrate materials may be selected from polycarbonate, blends of polycarbonate and polybutylene terephthalate, elastomer-modified polypropylene, blends of polypropylene and ethylene-propylene-diene rubber, acrylonitrile butadiene styrene copolymer, blends of acrylonitrile butadiene styrene copolymer with polycarbonate, acryl ester styrene acrylonitrile copolymer, polyamide and blends thereof, polyurethanes, blends of polycarbonate and polyethylene terephthalate, polybutylene terephthalate and mixtures thereof. The plastic substrate material may consist of the aforementioned materials or mixtures thereof.

The substrate may also be associated with a permittivity. The permittivity of the vehicle component comprising the repaired coating 108 may be determined from the permittivity of the substrate as well as the permittivity of each coating layer present within the repaired coating 108.

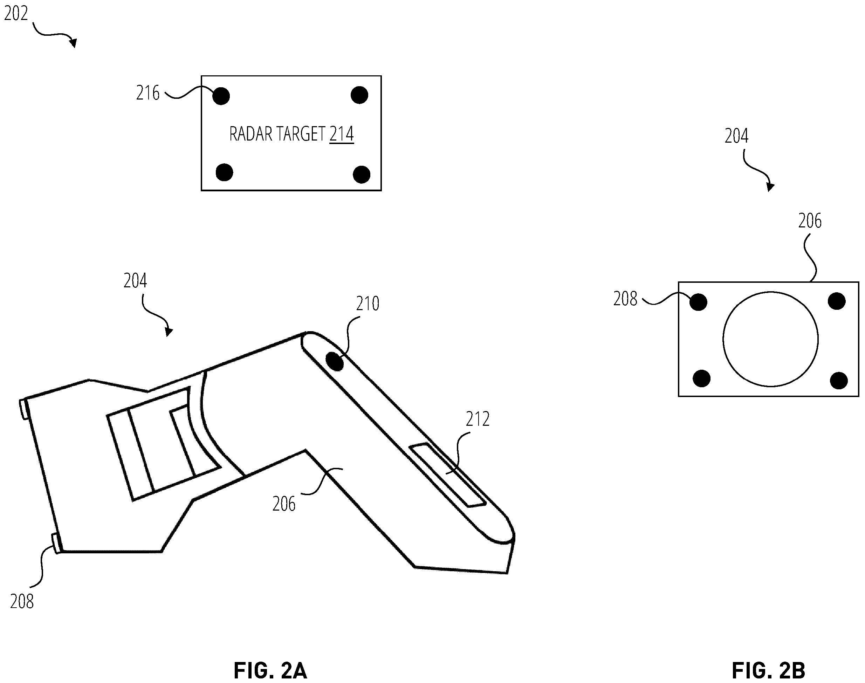

FIG. 2A illustrates schematically an example of a measurement device for measuring a radar transmission and/or reflection of at least a part of a vehicle part comprising a coating. The vehicle may be a vehicle as described in the context of FIG. 1A. The coating may include a repaired coating. The repaired coating may be prepared on the vehicle component as described in the context of FIG. 1A and FIG. 1B.

The measurement device 202 may include a handheld device 204 and a radar target 214. The radar target 214 may be physically separate from the handheld device 204. The measurement device 202 may hence represent a kit comprising at least two parts, namely the handheld device 204 and the radar target 214. While FIG. 2A illustrates only one radar target 214, the measurement device 202 may include several radar targets 214. For instance, measurement device 202 may include several radar targets 214 having different shapes and/or flexible and non-flexible radar targets 214. This may allow to use the measurement device 202 for measuring a radar transmission and/or reflection of different shapes of the vehicle components comprising the coating and/or of different sizes of coatings present on the vehicle components.

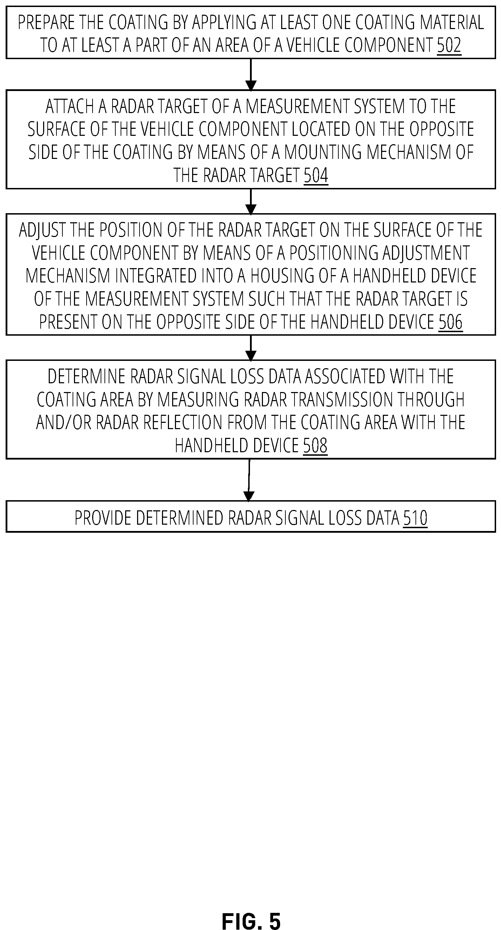

The handheld device 204 may include a housing 206. The housing 206 may comprise a switch 210 for switching the handheld device 204 on and off. The housing 206 may further comprise a display 212. The display 212 may be configured to display determined radar signal loss data, for example as described in the context of FIG. 5 The handheld device 204 may further include a positioning adjustment mechanism 208 integrated into the housing 206 of the handheld device 204 for adjusting the position of the radar target on the vehicle part.

With reference to FIG. 2B, the integrated positioning adjustment mechanism 208 may be located at one or more edges of the housing 206. The integrated positioning adjustment mechanism 208 may include one or more electromagnet(s). By use of the integrated positioning adjustment mechanism 208, the radar target 214 may be reliably positioned on the vehicle component comprising the coating such that the coating is positioned between the radar target 214 and the handheld device 204. The integrated positioning adjustment mechanism 208 hence allows to position the radar target 214 easily and reliable on the side of the vehicle component being opposite to the coating irrespective of the location of the coating on such vehicle component and irrespective of the thickness of the coated vehicle component and without requiring optical validation of the correct position of the radar target. This way, a reliable and accurate determination of radar signal loss data associated with the vehicle component comprising the coating is enabled, hence ensuring proper functioning of radar sensors mounted behind the vehicle component despite the coating, such as the repaired coating, present on such vehicle component. In addition, the use of electromagnet(s) allows to easily detach the radar target from the coated component by switching of the electric current and hence also the electric field between the electromagnets integrated into the housing 206 and ferromagnetic material of the mounting mechanism 216 present on the radar target 214. This avoids exchange of the vehicle component and instead allows preparation of the coating or repair of the damaged coating directly on the component, hence reducing the consumption of resources (e.g. substrate and coating material) required to prepare the vehicle component. Use of the measurement device hence helps to improve the environmental impact of the coating or the repair process by avoiding complete exchange of damaged vehicle parts to ensure operation of radar sensors mounted behind such vehicle parts since such damaged vehicle parts need to be disposed of as waste vehicle parts.

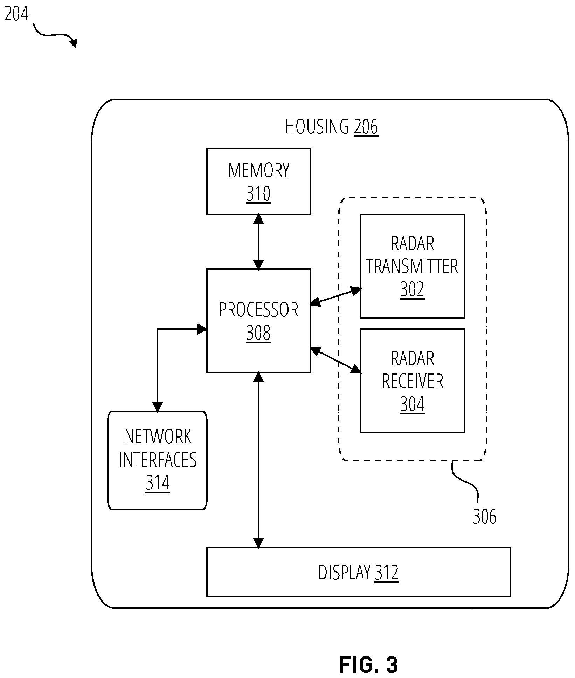

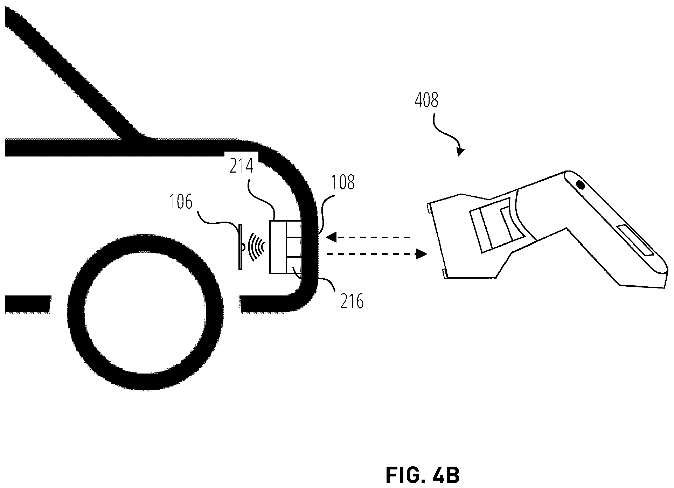

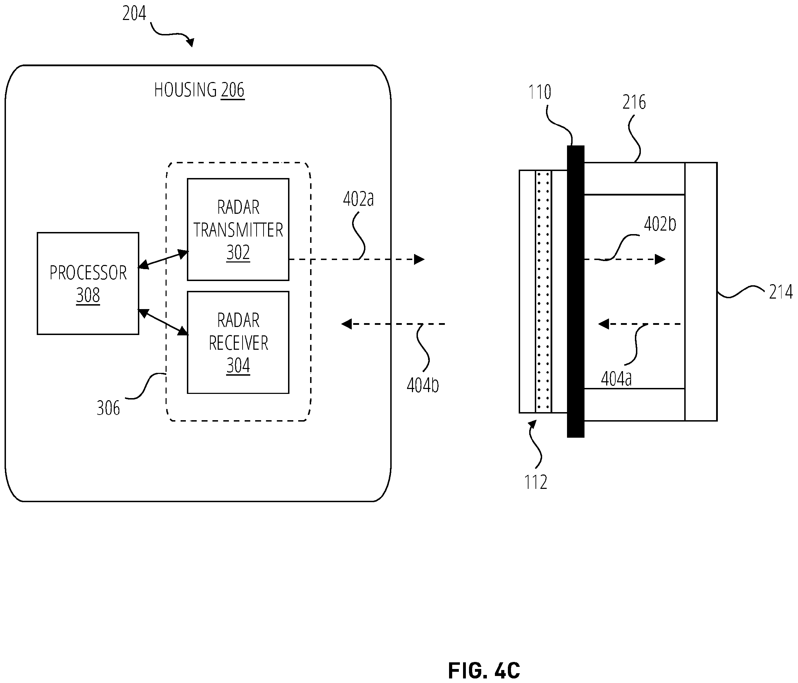

Returning to FIG. 2A and with reference to FIG. 3, the housing 206 of the handheld device 204 may include a radar transmitter 302 configured to emit a diverging beam of electromagnetic waves along a transmission path to the vehicle component. The diverging beam of electromagnetic waves may have a wavelength of 1 to 20 mm, in particular of 1.5 to 15 mm or of 15 mm to less than 4.1 mm or of 3.5 to 4.1 mm or a of 2 to 3 mm. The electromagnetic waves may have a frequency range of 20 GHz to 160 GHz, in particular at a frequency range of 20 GHz to less than 74 GHz or a frequency range of 74 GHz to 85 GHz or a frequency range of 100 to 140 GHz. The housing 206 may further include a radar receiver 304 configured to measure the electromagnetic waves reflected from a radar target along a return path. The electromagnetic waves measured by radar receiver 304 may correspond to electromagnetic waves emitted by radar transmitter 302 along a transmission path towards the radar target 214 which have been reflected by the radar target 214 along a return path (e.g. which have passed twice through the component comprising the repaired coating 108 - see for example FIG. 4B and FIG. 4C). While the radar transmitter 302 and radar receiver 304 are illustrated as two separate elements in FIG. 3, the radar transmitter 302 and the radar receiver 304 may be included or contained in a single radar transceiver unit 306 capable of transmitting and receiving the electromagnetic waves.

The housing 206 may further comprise a processor 308. The processor 308 may be connected to the radar transmitter 302 and radar receiver 304. The processor 308 may be configured to determine radar signal loss data associated with the coating being present on the vehicle component. The processor 308 may be configured to control radar transmitter 302 and/or the radar receiver 304. The processor 308 may be configured to gather data, such as the intensity of the emitted diverging beam of electromagnetic waves, from the radar transmitter 302 and/or the intensity of the reflected electromagnetic waves measured by radar receiver 304. The processor 308 may be configured to perform software-implemented calibration of the measured electromagnetic waves in order to compensate for geometry or environment-induced measurement error.

The processor 308 may be part of a circuit board. The processor 308 may utilize techniques, technologies and functions that may be performed by various computing components or devices. Such operations, tasks, and functions are sometimes referred to as being computer-executed, computerized, software-implemented, or computer-implemented. The circuit board may be realized by any number of hardware, software, and/or firmware components configured to perform the specified functions. For example, the circuit board may employ various integrated circuit components, e.g., memory elements, digital signal processing elements, logic elements, look-up tables, or the like, which may carry out a variety of functions under the control of one or more microprocessors or other control devices.

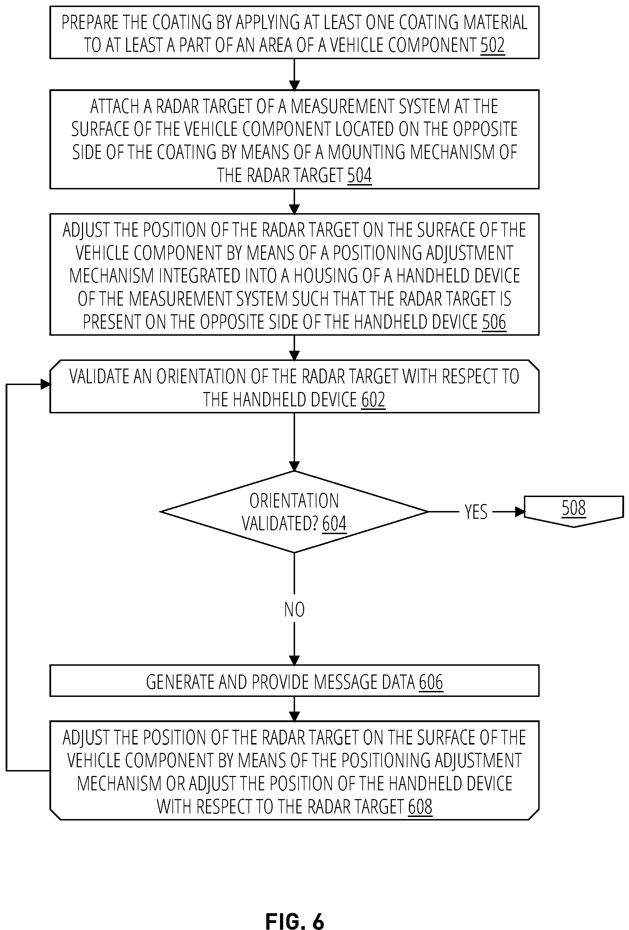

The processor 308 may be connected to memory 310. Memory 310 may comprise computer-executable instructions that, when executed by the controller, cause the handheld device to perform one or more operations. The one or more operations may include emitting the diverging beam of electromagnetic waves, for example by radar transmitter 302, measuring the electromagnetic waves reflected from the radar target 214 along the return path, for example by radar receiver 304, determining the radar signal loss data based on the portion of the electromagnetic waves measured by radar receiver 304 and/or validating the orientation of the radar target 214, for example as described in the context of FIG. 6. Processor 308 may operate based on instructions stored in memory 310. Processor 308 may be configured to store determined radar signal loss data in memory 310.

The housing 206 may further include a display 212. The display 212 may be connected to controller 308. The display 212 may be configured to display data received from the processor 308. For example, the display 212 may be configured to display radar signal loss data determined by processor 308. In another example, display 212 may be configured to display message data generated by processor 308.

Returning to FIG. 2A, the radar target 214 may include a mounting mechanism 216. The mounting mechanism 216 may be configured to detachably mount the radar target 214 to the vehicle component such that the vehicle component is located between the handheld device 204 and the radar target 214.

Hence, mounting mechanism 216 may allow to attach the radar target 214 to the vehicle component and to detach the radar target 214 after finishing the measurement without destroying the vehicle component or the radar target 214. The mounting mechanism 216 may include ferromagnetic material(s), clamps or the like. The mounting mechanism of the radar target may match the positions of the positioning adjustment mechanism integrated into the housing 206 the handheld device 204. This may ensure that the radar target can be reliably positioned as required on the opposite side of the coating by means of the handheld device. Hence, the radar target can be positioned without requiring access to vehicle component or optical control of the positioning process, allowing to determine the radar signal loss data of the coating via the handheld device on positions of the vehicle component where the side of the vehicle component being opposite of the coating is not accessible or is hard to access. This allows to avoid demounting of vehicle components for the determination of the radar signal loss data and/or the preparation of physical samples mimicking the coating for determining the radar signal loss data.

The mounting mechanism may be positioned at one or more locations on the radar target 214, in particular at one or more position(s) around the edges of the radar target 214. This may ensure reliable mounting of the radar target 214to the vehicle component on the opposite side of the coating, ensuring reliable and accurate determination of the radar signal loss data. This way, the radar target 214may also be reliably attached to non-flat vehicle components, allowing reliable and accurate determination of the radar signal loss data irrespective of the form of the vehicle component comprising the coating. The measurement system may include different radar targets to account for different geometries of the vehicle components comprising the coating. For instance, the measurement system may comprise a flexible radar target 214, e.g. a radar target comprising a flexible substrate that can adapt to curves present within the vehicle component, and a rigid radar target 214, e.g. a radar target comprising a rigid substrate.

The radar target 214 may be configured to reflect the electromagnetic waves transmitted by the vehicle component comprising the coating. The radar target 214 may include a surface for reflecting the electromagnetic waves transmitted by the vehicle component comprising the coating. The electromagnetic waves reflected by the radar target 214 may pass along a return path through the vehicle component and reach the radar receiver 304 of the handheld device 204. Hence, the electromagnetic waves emitted by radar transmitter 302 may pass 2 times through the vehicle component comprising the coating (see also FIG. 4B and FIG. 4C). The surface for reflecting the radar signal may include a coating having reflecting properties (e.g. a reflective coating). The coating may be present on a substrate, such as a flexible or rigid substrate. The substrate may be a polymeric substrate, a metal substrate or a glass substrate. The reflective coating may include a coating comprising one or more metals. The metal(s) may be selected from silver, gold, aluminium, nickel, copper, steel or the like. The reflective coating may be coated with a protective coating to avoid damage to the reflective coating. The radar target 214 may comprise or consist of a reflective material. Examples of reflective materials include metals, such as aluminium or steel, fibreglas, conductive polymer and/or carbon fibers.

The radar target 214 may comprise a retroreflective structure, such as a cube corner structure. This structure may allow to reflect the electromagnetic waves in the direction of the incidence regardless of the orientation of the radar target or the angle of incidence of the emitted diverging beam of electromagnetic waves. The radar target may have a surface that diffusely reflects light such that the intensity of the reflected light is the same in all directions, e.g. may be a Lambertian scatterer.

The radar target 214 may be configured to absorb the electromagnetic waves transmitted by the vehicle component comprising the coating. This may allow to determine the portion of the electromagnetic waves emitted by radar transmitter 302 and being reflected by the vehicle component comprising the coating. Examples of a radar target 214 configured to absorb the electromagnetic waves emitted by radar transmitter 302 along a transmission path may include carbon foams or lossy foam absorbers.

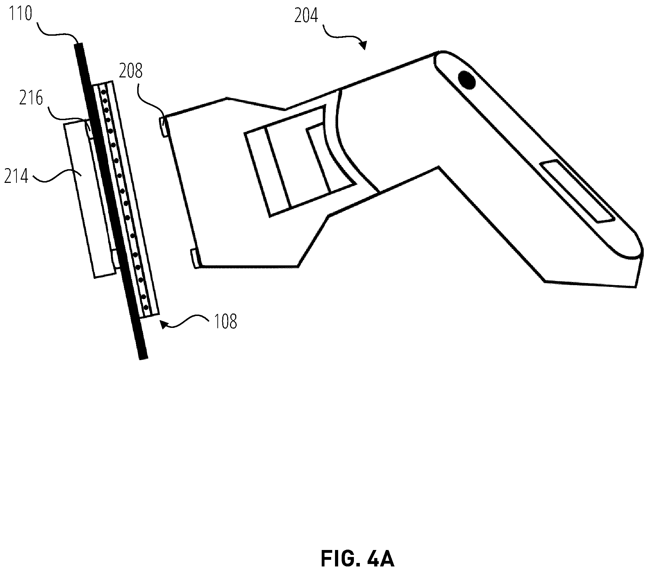

FIG. 4A illustrates a perspective view of an example measurement setup for measuring a radar transmission and/or reflection of at least a part of a vehicle part comprising a coating using the measurement system illustrated in FIG. 2A. The coating may comprise a repaired coating. The repaired coating may be prepared on the vehicle component as described in the context of FIG. 1A and FIG. 1B. The measurement setup illustrated in FIG. 4A makes use of the measurement system illustrated in FIG. 2A, e.g. the measurement setup includes the handheld device 204 and the radar target 214 of the measurement system 202 illustrated in FIG. 2A.

The radar transmission of the vehicle component comprising the coating may be measured using a radar target 214 configured to reflect the directed beam of electromagnetic waves to the return path passing back through the vehicle component. The radar reflection of the vehicle component comprising the coating may be measured using a radar target 214 configured to absorb absorbing the directed beam of electromagnetic waves transmitted along a transmission path through the vehicle component.

As illustrated in FIG. 4A, the vehicle component may include a substrate 110. The substrate 110 may comprise a coating 108. The coating may comprise one or more coating layer(s). The coating 108 may be a repaired coating. The repaired coating may be prepared as described in the context of FIG. 1A. The repaired coating may include one or more coating layer(s), such as illustrated in FIG. 1B.

With further reference to FIG. 4B, the radar target 214 may be attached to the substrate 110 of the vehicle component using the mounting mechanism 216. The radar target 214 may be positioned by means of the positioning adjustment mechanism 208 integrated into the housing 206 of the handheld device 204 such that the radar target 214 is present on the opposite side of the coating area. This allows the radar target 214 to reflect or absorb any beam of electromagnetic waves emitted from the handheld device 204 along a transmission path and being transmitted through the coating 108 and substrate 110 of the vehicle component. The radar target 214 may be positioned on the opposite side of the coating 108 using the positioning adjustment mechanism 208 integrated into the housing 206 of the handheld device 204. This allows to ensure that radar loss signal data associated with the vehicle component comprising the coating area and hence also associated with the presence of the coating 108 on the substrate 110 of the vehicle component can be determined from the data acquired by the handheld device 204, e.g. from the portion of the emitted electromagnetic waves measured by radar receiver 304 of handheld device 204. After positioning of the radar target 214 by means of the positioning adjustment mechanism 208 integrated into the housing 206 of the handheld device 204, determination of the radar transmission and/or radar absorption of the vehicle component comprising the coating 108 may be initiated, for example as illustrated in FIG. 4C.

With further reference to FIG. 4C and with continued reference to FIG. 4A and FIG. 4B, a diverging beam of electromagnetic waves having a wavelength of 1 to 20 mm 402a may be emitted and may be directed along a transmission path from the radar transmitter 302 of the handheld device 204 towards the radar target 214 positioned at the opposite side of the coating 108 on the substrate 110 of the vehicle component. The emitted diverging beam of electromagnetic waves 402a may be transmitted through the coating 108 and substrate 110 and the transmitted portion 402b may be reflected at the radar target 214 along a return path. Portions of the diverging beam of electromagnetic waves 402a may be reflected or otherwise lost when passing through the coating 108 and the substrate 110.

The transmitted portion 402b of the electromagnetic waves that reaches the radar target 214 may be reflected by such radar target 214 along the return path and may form a reflected electromagnetic waves 404a. As shown, the reflected electromagnetic waves 404a may be directed back toward the radar receiver 304 of the handheld device 204. The reflected electromagnetic waves 404a may be transmitted or passed along the return path through the substrate 110 and the coating 108 and the transmitted or passed portion 404b of the reflected electromagnetic waves 404a may be received at radar receiver 304 of the handheld device 204. Based on the measured portion 404b as well as the emitted diverging beam of electromagnetic waves 402a, the processor 308 may be configured to determine radar signal loss data. The radar signal loss data may correspond to a percentage of the emitted electromagnetic waves 404a. The percentage may be determined based on the transmitted or passed portion 404b measured by the radar receiver 304.

By adjusting the radar target using the positioning adjustment mechanisms integrated into the housing of the handheld device a precise control over the positioning of the radartarget is achieved, ensuring optimal reflection of the electromagnetic waves along the return path. This enables a more accurate and reliable measurement of the radar signal loss and ensures that the coating on the vehicle part fulfils given standards and requirements to guarantee proper functioning of the sensor mounted behind such vehicle part despite the presence of a coating on such vehicle part. Reliable and accurate measurement allows to repair vehicle parts while ensuring proper functioning of the sensors mounted behind such vehicle parts, hence avoiding the attachment of new coated vehicle parts during the repair process. This allows to reduce the environmental impact of the repair process by avoiding generation of waste (e.g. damaged vehicle parts) and/or consumption of materials (e.g. coating materials and substrates required to prepare new coated vehicle parts).

By using a handheld device comprising an integrated positioning adjustment mechanism, a better reproducibility and less susceptibility to errors with respect to the determined radar signal loss data may be achieved by ensuring a constant homogeneity of the emitted diverging beam of electromagnetic waves hitting the vehicle component. The integrated positioning adjustment mechanism further allows to use an electromagnetic positioning adjustment mechanism requiring control via the processor of the handheld device. Use of an electromagnetic positioning adjustment mechanism allows to reliably position the radar target downstream from the location of the coated vehicle component irrespective of the thickness of the coated vehicle component, hence allowing to flexibly use the measurement system on a large variety of vehicle components relation to the measuring device is also possible over larger distances (e.g. due to thicker components). In addition, the alignment of the radar target with respect to the radar transmitter may be reliably controlled based on the field strength of each individual electromagnet contained within the electromagnetic positioning adjustment mechanism, avoiding misalignment of the radar target with respect to the radar transmitter. Misalignment may result in inconsistent transmission and return paths, increased scattering and diffraction of the electromagnetic waves on the return path, reduced signal-to-noise ratio resulting in masking small transmission and/or reflection losses with noise, electromagnetic wave loss due to geometric loss factors leading to incorrect radar signal loss data and reduced reproducibility of the determined radar signal loss data. Hence, reliably controlling the alignment of the radar target with respect to the radar transmitter via the electromagnetic positioning adjustment mechanism may allow to improve the accuracy and reliability of the determined radar loss signal, ensuring that the radar sensors mounted behind coated vehicle components are not negatively influenced by the presence of the coating on the vehicle component due to unreliable radar loss signal data determination.

By reliably and accurately determining the radar signal loss data associated with coated components irrespective of the position of the component on the vehicle, the shape of the component and the thickness of the component, the measurement system eliminates the need for preparing physical samples containing a substrate and the coating, which can be time-consuming and costly, consumes material and generates waste. This enables a more efficient and cost-effective coating or coating repair process, reducing the environmental impact of coating or coating repair process by reducing the amount of consumed coating material and the amount of generated waste associated with the preparation of physical samples. In addition, exchange of coated components being out of specification in terms of appearance or damaged coated components may be avoided or reduced since it may be ensured that the radar signal loss of the repaired coating can be reliable and accurately determined using the measurement system. Such reduced exchange may allow to reduce the amount of waste vehicle components that need to be disposed of and may hence further improve the environmental impact associated with the coating process or the coating repair process.

FIG. 5 illustrates a flow chart of an example of a method for measuring a radar transmission and/or reflection of at least a part of a vehicle part comprising a coating. The vehicle may be a vehicle as described in the context of FIG. 1A. The coating may be a repaired coating. The repaired coating may be prepared on the vehicle component as described in the context of FIG. 1A and FIG. 1B. The method may be implemented at least in part by using the measurement system 202 described in the context of FIG. 2A and FIG. 2B.

The coating may be prepared by applying at least one coating material to an area, such as a damaged area of the coating. The area may comprise the vehicle component area or a part thereof. The coating material(s) result in a coating having an appearance matching the appearance of the adjacent coating (e.g. the coating being adjacent to the damaged area or the coating of the vehicle part being adjacent to the coating). Hence, coating material(s) may be selected based on the appearance of the coating adjacent to the damaged area or the appearance of the coating of the adjacent vehicle component(s).

The coating material applied to the area may be determined by
- providing sample coating material data associated with the coating present adjacent to the damaged area or a coating present on adjacent vehicle component(s),
- providing candidate coating material data associated with candidate coating material(s), wherein the candidate coating material data includes candidate color data and candidate radar signal loss data,
- selecting - based on the provided sample coating material data - coating material data from the candidate coating material data by matching the provided sample color data with the candidate color data,
- providing the selected coating material data.

The sample coating material data may include color data. The color data may include reflectance data, color space data, such as CIEL*a*b* values or CIEL*C*h* values, gloss data, texture parameters, such as texture characteristics and/or coarseness characteristics, or a combination thereof.

The sample coating data may be provided by determining such sample coating data using measurement device(s) configured to determine color data. For instance, color data, such as reflectance data, associated with the coating present on the vehicle component may be determined using a multi-angle spectrometer. Color space data, e.g., CIEL*a*b* values, may be calculated from the acquired reflectance data and the radiation function of the light source (see for example, ASTM E2194-14 (2017) and ASTM E2539-14 (2017). Texture parameters may be determined from texture images acquired under defined light conditions and at defined angles. The texture parameters may be calculated from the obtained images. Examples of such calculated texture parameters include the textural values G diffuse or Gdiff (so called graininess or coarseness or coarseness value or coarseness characteristic) which describes the coarseness characteristics of a coating layer under diffuse illumination conditions, Si (sparkle intensity), and Sa (sparkle area) which describe the sparkle characteristics of a coating layer under directional illumination conditions, as introduced by the company Byk-Gardner ("Den Gesamtfarbeindruck objektiv messen", Byk-Gardner GmbH, JOT 1.2009, vol. 49, issue 1, pp. 50-52). The texture parameters introduced by Byk-Gardner may be determined from gray scale images. It is also possible for texture parameters to be determined from color images, as e. g. introduced by the company X-Rite with the MAT6 or MA-T12 multiangle spectrophotometers.

Candidate coating material data may be associated with pigmented candidate coating material(s), e.g. coating material comprising one or more pigments. Pigments may be selected from color pigment(s) and/or effect pigment(s). Candidate coating material data may include a candidate coating material identifier(s), formulation data associated with the formulation of the respective candidate coating material, data associated with further coating materials being compatible with the respective candidate coating material or combinations thereof. The identifier may include a unique ID, a color name, a color number, a color code, a bar code, or a combination thereof. Data associated with further coating materials being compatible with the respective candidate coating material may include data associated with clearcoat materials being compatible with the respective candidate coating material, such as clearcoat identifier(s), formulation data associated with the respective compatible clearcoat material(s) or a combination thereof.

Candidate coating material data may be stored on a database. The database may be accessible by the computing device performing the color matching operation (e.g. the selection of the coating material data from the candidate coating material data). The computing device performing the color matching operation may be a stationary computing device located within the repair facility performing a repair process on the damaged coating of the vehicle part. The computing device may be a accessible via a communication interface by the repair facility or technician performing the repair process. For instance, the computing device may be a server comprising a memory containing executable code configured to access the database storing the candidate coating materials and to select coating material data from such candidate coating material data based on received sample coating material data.

Matching the provided sample color data with the candidate color data may include determining matching candidate color data by determining the distance between the sample color data and the candidate color data and comparing the determined distance to predefined thresholds. Matching the provided sample color data with the candidate color data may include calculating color difference value(s) between CIEL*a*b* values included in the sample coating data and CIEL*a*b* values included in the candidate color data, and comparing the determined color difference value(s) to predefined threshold(s). Coating material data may be determined using a data driven model parametrized on historical color data, in particular CIEL*a*b* values, and historical color difference values. Such models are described, for example, in US 2005/0240543 A1. Color difference value(s) may be determined using commonly known color tolerance equation(s), such as the CIE94 color tolerance equation, the CIE2000 color tolerance equation, the DIN99 color tolerance equation or a color tolerance equation described in WO 2011/048147 A1.

The selected coating material data may include formulation data indicating the formulation of the coating material. The formulation data may be used to prepare the respective coating material associated with the selected coating material data.

The determined coating material data may be provided for display. The selected coating material data may be provided via a communication interface for monitoring and/or controlling the production of the coating material associated with the selected coating material data. For example, the selected coating material data may be provided to a mixing device configured to prepare coating material(s) based on formulation data included in received coating material data. The prepared coating material(s) may include opaque coating material(s), such as pigmented basecoat material(s), and/or transparent coating material(s), such as clearcoat material(s).

The coating material(s) may be prepared according to the selected coating material data. The prepared coating material(s) may be applied to the damaged area of the vehicle component. Prior to application of the prepared coating material(s), the damaged area may be pretreated. This may include sanding the damaged area to remove at least a part of the damaged coating. This may further include applying a filler coating material, curing the applied filler coating material and sanding the formed filler coating layer. Use of a filler coating material may improve the adhesion of the repaired coating to the underlying substrate of the vehicle component. In addition, use of the filler may allow to level out defects of the substrate to provide a smooth surface for application of the prepared coating materials. Application of coating material(s), such as the filler coating material and the prepared coating material(s), may be performed via spray application processes known in the state of the art. Such application processes may include electrostatic spray application and/or pneumatic spray application. The coating material(s) may be applied via spray guns operated by robot(s) and/or human operators. The prepared coating material(s) may be applied to the damaged area or the pretreated area. If more than one prepared coating material is to be applied, the prepared coating materials may be applied successively. For instance, the prepared basecoat material may be applied to the sanded filler layer followed by application of the prepared clearcoat material. The applied coating material(s) may be dried and/or cured. Curing may be performed after application of each coating material. Curing may be performed after application of at least two coating material(s). Curing may be performed at elevated temperatures, for example at 25 to 80°C. After curing of the applied coating material(s), the repaired coating area may be obtained.

A measurement system including a radar target and a handheld device including a radar transmitter and a radar receiver may be provided. The measurement system may be a measurement device as illustrated in FIG. 2A and FIG. 2B.

The radar target of the measurement system may be attached to the surface of the vehicle component located on the opposite side of the coating by means of a mounting mechanism of the radar target. The radar target may be radar target 214 as described in the context of FIG. 2A and FIG. 4A to FIG. 4C. The radar target 214 may be attached to the surface at any location. This allows to attach the radar target 214 at a surface of the vehicle component being easily accessible and avoids demounting the vehicle component for the measurement. The radar target 214 may be attached to the surface of the vehicle component such that the coating area is located between the radar target 214 and the handheld device 204, for example as illustrated in FIG. 4A to FIG. 4C.

The position of the radar target on the surface of the vehicle component may be adjusted by means of a positioning adjustment mechanism integrated into the housing of the handheld device of the measurement system such that the coating area is located between the radar transmitter of the handheld device and the radar target is. The handheld device may be a handheld device 204 as illustrated in FIG. 2A and FIG. 2B. The positioning adjustment mechanism 208 integrated in the housing 206 of the handheld device 204 may be configured to move the radar target 214 along the surface of the vehicle component via movement of the handheld device 204. Hence, the radar target 214 can be positioned behind the coating area by moving the handheld device 204 from the original position of the radar target 214 (e.g. the position of the radar target upon attachment of said radar target 214 to the surface) to the coating area. This ensures that the radar signal loss data associated with the coating area can be reliably and accurately determined and compared to given threshold value(s) to ensure correct operation of the radar sensor(s) mounted behind the coating area after the coating or coating repair process. This avoids exchange of vehicle components comprising a damaged or out of specification coating and hence reduces the material consumption and waste generation required for such exchange as compared to the repairing the damaged or out of specification area of the coating. Such reduced material consumption and waste generation may allow coating or coating repair processes having a reduced environmental impact while ensuring the correct operation of radar sensors mounted behind such coating areas.

Radar signal loss data associated with the coating area may be determined by measuring transmission of emitted electromagnetic waves through and/or reflection of emitted electromagnetic waves from the vehicle component at the coating area with the handheld device. With reference to FIG. 4A to FIG. 4C, the radar transmission may be measured with the handheld device by emitting the diverging beam of electromagnetic waves 402a from the radar transmitter 302 of the handheld device 204 and directing the emitted diverging beam of electromagnetic waves along the transmission path towards the radar target 214. The electromagnetic waves may have a wavelength of 1 to 20 mm, in particular of 1.5 to 15 mm or of 15 mm to less than 4.1 mm or of 3.5 to 4.1 mm or a of 2 to 3 mm. The electromagnetic waves may have a frequency of 20 GHz to 160 GHz, in particular a frequency of 20 GHz to less than 74 GHz or a frequency of 74 GHz to 85 GHz or a frequency of 100 to 140 GHz. The emitted electromagnetic waves may transmit through the coating area and substrate twice and the portion of the emitted electromagnetic waves 404a reflected by the radar target 214 and being transmitted 404b through the substrate and the coating area may be measured by radar receiver 304 of the handheld device 204. With reference to FIG. 3, processor 308 of the handheld device 204 may be configured to determine the radar signal loss data. The processor 308 may be configured to control the handheld device 204 and to determine the radar signal loss data based on executable instructions stored in a memory 310 of the handheld device 204 and being connected to the processor 308. The processor 308 may be configured to determine the radar signal loss data based on the portion of the emitted electromagnetic waves measured by radar receiver 304 of the handheld device 204. The processor 308 may be configured to determine the radar signal loss data as a percentage of the electromagnetic waves emitted by the radar transmitter 302 of the handheld device 204. The determined radar signal loss data may represent the difference between the electromagnetic waves emitted by radar transmitter 302 and the electromagnetic waves measured by the radar receiver 304.

The radar signal loss data may be determined by a computing device being separate from the handheld device 204. The handheld device 204 may be configured to transfer, for example via a computing interface, data associated with the emitted electromagnetic waves and data associated with the measured electromagnetic waves to such computing device and the computing device may be configured to determine the radar signal loss data based on such received data.

Returning to FIG. 5, the determined radar signal loss data may be provided. Providing the determined radar signal loss data may include providing the determined radar signal loss data for display. With reference to FIG. 2A and FIG. 3, processor 308 may be configured to provide the determined radar signal loss data to a display 212 and the display 212 may be configured to display the received radar signal loss data. Providing the determined radar signal loss data may include providing the determined radar signal loss data to a data storage. The determined radar signal loss data may be associated with coating material identifier(s) of coating material(s) used to prepare the coating area. The determined radar signal loss data may be further associated with production data associated with the production of the coating on the area. The production data may include a production identifier associated with the production of the coating on the area. The determined radar signal loss data may be provided via a communication interface of the handheld device 204 to the data storage. The data storage may be a database.

By adjusting the radar target using the positioning adjustment mechanisms integrated into the housing of the handheld device a precise control over the positioning of the radartarget is achieved, ensuring optimal reflection of the electromagnetic waves along the return path. This enables a more accurate and reliable measurement of the radar signal loss and ensures that the repaired coating on the vehicle part fulfils given standards and requirements to guarantee proper functioning of the sensor mounted behind such vehicle part despite the presence of a coating on such vehicle part. Reliable and accurate measurement allows to repair vehicle parts while ensuring proper functioning of the sensors mounted behind such vehicle parts, hence avoiding the attachment of new vehicle parts during the coating or coating repair process. This allows to reduce the environmental impact of the repair process by avoiding generation of waste (e.g. damaged or out-of-specification vehicle parts) and/or consumption of materials (e.g. coating materials and substrates required to prepare new coated vehicle parts). By using a handheld device comprising an integrated positioning adjustment mechanism, a better reproducibility and less susceptibility to errors with respect to the determined radar signal loss data may be achieved by ensuring a constant homogeneity of the emitted diverging beam of electromagnetic waves hitting the vehicle component. The integrated positioning adjustment mechanism further allows to use an
FIG. 6 illustrates a flow chart of a further example of a method for measuring a radar transmission and/or reflection of at least a part of a vehicle part comprising a coating including a coating area. The vehicle may be a vehicle as described in the context of FIG. 1A. The coating may include a repaired coating. The repaired coating may be prepared on the vehicle component as described in the context of FIG. 1A and FIG. 1B. The method may be implemented at least in part by using the measurement system 202 described in the context of FIG. 2A and FIG. 2B.

The method illustrated in FIG. 6 may include blocks 502 to 506 described in the context of FIG. 5. After adjusting the position of the radar target on the surface of the vehicle component by means of a positioning adjustment mechanism integrated into the housing of a handheld device of the measurement system such that the radar target is present on the opposite side of the coating area as described in the context of FIG. 5, the orientation of the handheld device 204 with respect to the adjusted position of the radar target 214 may be validated or evaluated. The positioning adjustment mechanism integrated into the housing of a handheld device may include one or more electromagnet(s). The electromagnet may include a coil of wire that generates a magnetic field through the flow of electric current in the coil of wire. The coil may be wound around a core made of ferromagnetic materials to enhance the magnetic field strength. In contrast to ferromagnetic materials, the magnetic field may be turned on and off or adjusted via the electric current. By adjusting the magnetic field of the electromagnet(s), the radar target may be mounted or dismounted from the vehicle component in a reliable yet simple manner. In addition, the alignment of the radar target with respect to the handheld device and hence the radar transmitter included therein may be reliably controlled based on the field strength of each individual electromagnet contained within the positioning adjustment mechanism, avoiding misalignment of the radar target with respect to the radar transmitter and allowing to improve the accuracy and reliability of the radar loss signal data determination. Use of electromagnets moreover allows to reliably attach the radar target downstream of the vehicle component irrespective of the thickness of the vehicle component since the field strength of the electromagnets can be adjusted to the thickness of the component.

The mounting mechanism of the radar target may include one or more ferromagnetic materials. The location of the adjustment mechanism integrated into the housing of a handheld device may match the location of the mounting mechanism on the radar target, for example as described in the context of FIG. 2A to FIG. 4B.

The orientation of the radar target with respect to the handheld device may be validated by measuring the field strength of a magnetic field produced by the positioning adjustment mechanism integrated into the housing of the handheld device and a ferromagnetic mounting mechanism of the radar target. The orientation of the radar target may be validated if the magnetic field strength for each electromagnet of the positioning adjustment mechanism is not deviating, in particular significantly deviating, from the magnetic field strength of the other electromagnets. A significant deviation may include a deviation of the magnetic field strength of one electromagnet with respect to the magnetic field strength of other electromagnets of more than 0.5% or more than 1% or more than 2% or more than 3% or more than 5% or more than 10%. The processor of the handheld device may be configured to measure the magnetic field strength and to compare the measured magnetic field strength. The measurement device may include one or more sensor(s) configured to measure the magnetic field strength, such as Hall effect sensor(s) positioned around the electromagnets. These sensors may produce a voltage proportional to the magnetic field strength when exposed to the magnetic field of the respective electromagnet. The voltage produced by the Hall effect sensor(s) may be converted to a digital signal using an analog-to-Digital Conversion (ADC) present within the handheld device. The processor of the handheld device may be configured to determine magnetic field strength value(s) based on the digital signals and calibration data associated with the sensor(s). Verification of the orientation of the radar target may ensure reliable positioning of the radar target with respect to the radar transmitter of the handheld device if the orientation cannot be controlled by visible inspection due to the location of the coated component on the automotive. By using electromagnetic positioning adjustment mechanism integrated into the housing of the handheld device, the radar target can be reliably positioned downstream of the coated component irrespective of the location and thickness of the coated component on the automotive while ensuring correct alignment of the radar target with the radar transmitter of the handheld device. This way, the reliability and accuracy of the determined radar signal loss data may be improved, avoiding incorrectly determined radar signal loss data due to incorrect orientation of the radar target and hence reducing the malfunction of the radar sensor due to the presence of a coating on the component mounted before the sensor. This is especially important for repair processes since it needs to be ensured that the repaired coating does not negatively influence the function of the radar sensor.

The orientation of the radar target with respect to the handheld device may be validated by measuring the strength of the emitted electromagnetic waves measured by the radar receiver. The strength of the received radar signal being below a given threshold may indicate a wrong orientation of the radar target. The processor of the handheld device may be configured to compare the strength of the received electromagnetic waves to predefined threshold value(s).

The orientation of the radar target may be validated if the radar target is oriented in a 90 degree angle with respect to the emitted electromagnetic waves. The orientation of the radar target in a 90 degree angle with respect to the emitted electromagnetic waves may be validated as previously described.

If the orientation of the radar target with respect to the handheld device, in particular the radar transmitter of the handheld device, is validated, the method may proceed to block 508 of FIG. 5. If the orientation of the radar target with respect to the handheld device is not validated, message data may be generated. The message data may indicate incorrect orientation of the radar target and/or the handheld device. The generated message data may be provided. The message data may be generated by the processor of the handheld device. The message data may be provided for display, for example for display on a display contained in the housing of the handheld device.

The position of the radar target on the surface of the vehicle may be adjusted by means of the position adjustment mechanism integrated into the housing of the handheld device if the orientation of the radar target is not validated. The position may be adjusted by a user in response to receiving a message indicating incorrect orientation of the radar target with respect to the handheld device. The message may be displayed on the display of the handheld device. The position of the handheld device may be adjusted in response to receiving a message indicating incorrect orientation of the radar target and/or the handheld device 204. Upon repositioning of the radar target and/or the handheld device, the method may return to block 602 and validate the new orientation of the radar target with respect to the handheld device 204.

By validating the orientation of the radar target with respect to the handheld device, reliable and accurate determination of the radar signal loss data can be ensured since the radar signal loss data is depending at least in part on the reflection of the electromagnetic waves along a the return path from the radar target to the radar receiver. Ensuring correct orientation of the radar target with respect to the handheld device hence allows to ensure that the determined radar signal loss data is correctly reflecting the radar signal loss due to the presence of the coating area on the vehicle component.

By using an electromagnetic positioning adjustment mechanism the radar target can be reliably positioned downstream from the location of the coated vehicle component irrespective of the thickness of the coated vehicle component, hence allowing to flexibly use the measurement system on a large variety of vehicle components relation to the measuring device is also possible over larger distances (e.g. due to thicker components). In addition, the alignment of the radar target with respect to the radar transmitter may be reliably controlled based on the field strength of each individual electromagnet contained within the electromagnetic positioning adjustment mechanism, avoiding misalignment of the radar target with respect to the radar transmitter. Reliably controlling the alignment of the radar target with respect to the radar transmitter via the electromagnetic positioning adjustment mechanism may allow to improve the accuracy and reliability of the determined radar loss signal, ensuring that the radar sensors mounted behind coated vehicle components are not negatively influenced by the presence of the coating on the vehicle component due to unreliable radar loss signal data determination.

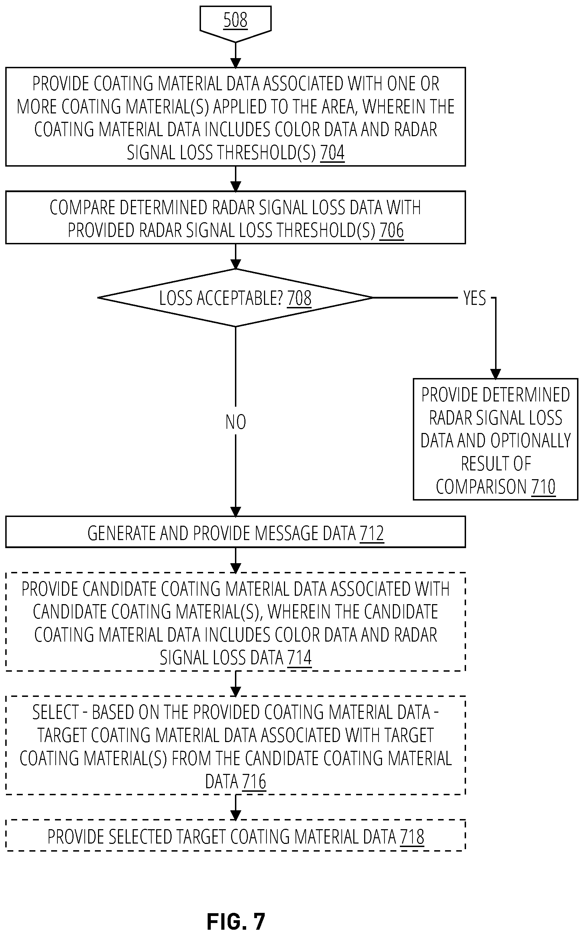

FIG. 7 illustrates a flow chart of a further embodiment of the methods described in FIG. 5 and FIG. 6. The method illustrated in FIG. 7 may include the blocks described in the context of FIG. 5 and FIG. 6. In addition, the method may include further steps as outlined hereinafter. The further steps may be performed by the processor of the handheld device. The further steps may be performed by another computing device being separate from the handheld device. The handheld device may be configured to provide the determined radar signal loss data to such further computing device. The further computing device may be configured to gather determined radar signal loss data from the handheld device. For instance, the further computing device may be configured to gather determined radar signal loss data from the handheld device upon receiving a coating material identifier associated with the coating material data.

Coating material data associated with one or more coating material(s) applied to substrate may be provided. The coating material data may include color data and radar signal loss threshold(s). The coating material data may be provided by providing a coating material identifier associated with the coating material data. The coating material identifier may include any identifier uniquely associated with the respective coating material. The identifier may include a unique ID, a color name, a color number, a color code, a bar code, or a combination thereof. The coating material data may further include formulation data associated with the formulation of the respective coating material. The coating material data may be provided by gathering such coating material data in response to receiving one or more coating material identifier(s). The coating material data may be gathered from the database by matching received coating material identifier(s) with coating material identifier(s) stored in such database. The coating material data may be gathered by the computing device performing the comparison of the determined radar loss

Radar loss signal threshold(s) may include one or more data point(s) indicating thresholds with respect to acceptable radar signal loss. The threshold(s) may be associated with standards or requirements associated with the respective radar sensor. For instance, the threshold(s) may be derived from such standards and/or requirements.

Comparing the determined radar loss data with the provided threshold(s) may include assigning the determined radar signal loss data to the coating material data and data associated with the production of the coating prior to comparing the determined radar loss data with the provided threshold(s). Data associated with the production of the coating may include the production ID associated with the production of the coating area.

The determined radar signal loss data may be compared with the provided radar signal loss threshold(s). Comparing the determined radar signal loss data with the provided threshold(s) may include classifying the determined radar signal loss data using a classifier. The classifier may be a binary classifier discriminating between acceptable radar signal loss and non-acceptable radar signal loss. The determined radar signal loss data may be classified into acceptable or not acceptable via such classifier. Comparing the determined radar signal loss data with the provided radar signal loss threshold(s) may allow to determine whether the determined radar signal loss data is acceptable, e.g. whether the radar signal loss associated with such determined radar signal loss data is acceptable. The result of the classification may be provided. Providing the result of the classification may include providing the result of the classification for display. Providing the result of the classification may include providing the result of the classification to a database for storage.

If the determined radar signal loss data is above at least one provided radar signal loss threshold, the determined radar signal loss data and optionally the result of the comparison may be provided. The determined radar signal loss data and optionally the result of the comparison may be provided as described in the context of Fig 5.

If the determined radar loss signal data is below at least one of the provided radar signal loss threshold(s), message data may be generated and provided. The message data may be generated and provided by the computing system performing the comparison of the determined radar signal loss data with the provided radar signal loss threshold(s). The message data may include the result of the comparison of the determined radar signal loss data with the provided radar signal loss threshold(s) and optionally the determined radar signal loss data. The message data may include a classifier signifying the determined radar signal loss data as acceptable or non-acceptable. Message data may include the determined radar signal loss data, provided radar signal loss threshold(s) and the result of the comparison. Providing the message data may include providing the message data for display. Providing the message data may include providing the message data via a communication interface or API to another computing system being separate from the computing system generating the message data. Upon receipt of such message data, one or more actions may be initiated. The receipt of such message data may trigger one or more actions. The one or more actions may be predefined actions. The one or more actions may include determining target coating material data associated with radar signal loss data above the provided radar signal loss threshold(s) as described in the following. The radar signal loss data may be determined using one or more data driven model(s) or may be measured radar signal loss data. The one or more actions may include initiating a further measurement to determine whether the first measurement was performed correctly or not. The one or more actions may include determining target coating material data associated with target coating material(s). The target coating material data may be associated with radar signal loss data being above at least one provided radar signal loss threshold. The target coating material data may be associated with target color data matching the provided color data, e.g. the difference between the target color data and the provided color data may be below a predefined threshold value. This may ensure that coatings prepared from such target coating material(s) match the appearance of the coating present on the vehicle component or vehicle to avoid any visual differences in the appearance after repair of the vehicle component. The target coating material data may be determined by the computing device performing the comparison of the determined radar signal loss data with the provided radar loss signal threshold(s). The target coating material data may be determined by the computing device performing the comparison of the determined radar signal loss data with the provided radar loss signal threshold(s).

Determining the target coating material data may include:
- providing candidate coating material data associated with candidate coating material(s), wherein the candidate coating material data includes candidate color data and candidate radar signal loss data,
- selecting - based on the provided coating material data - target coating material data from the candidate coating material data by matching the provided color data with the candidate color data under the constraint of the radar signal loss threshold(s) included in the provided coating material data,
- providing the selected target coating material data.

The candidate coating material data may be stored in a database as previously described. Matching of the provided color data with the candidate color data may be performed as previously described. Color difference value(s) may be determined for matching candidate coating data as previously described. Target coating material data may be selected by comparing radar signal loss data included in matching candidate coating data with the radar signal loss threshold(s) included in the provided coating material data and selecting target coating material data associated with radar signal loss data above at least one of the provided radar signal loss thresholds.

The selected target coating material data may be provided for display. The selected target coating material data may be provided via a communication interface for monitoring and/or controlling production of the target coating material based on such target coating material data.

By comparing the determined radar signal loss data with predefined radar signal loss threshold(s), reliable operation of the radar sensor(s) mounted behind the repaired coating area may be ensured despite the repair process performed on the coating of the vehicle component. This avoids malfunction of radar sensor(s) due to reduced transmission of the radar signal through the repaired coating area, resulting in a lower sensitivity of the radar sensor and hence in decreased detection of objects present in front of the radar sensor. The radar signal loss threshold(s) may correspond or signify threshold(s) defined in specifications or standards associated with the respective radar sensor(s). The threshold(s) may define the maximal allowable dampening of the substrate and coating which still allows sufficient operation of the radar sensor(s) mounted behind such coated substrate.

Determining target coating material data may allow to identify further coating materials which can be used to repair the damaged coating on the vehicle component such that the repaired coating fulfils given requirements and/or specifications concerning the absorption and/or reflection of radar signals by such repaired coating. This allows reliable repair of damaged coatings on vehicle components mounted before radar sensors while ensuring proper functioning of the radar sensors after repairing the damaged coating.

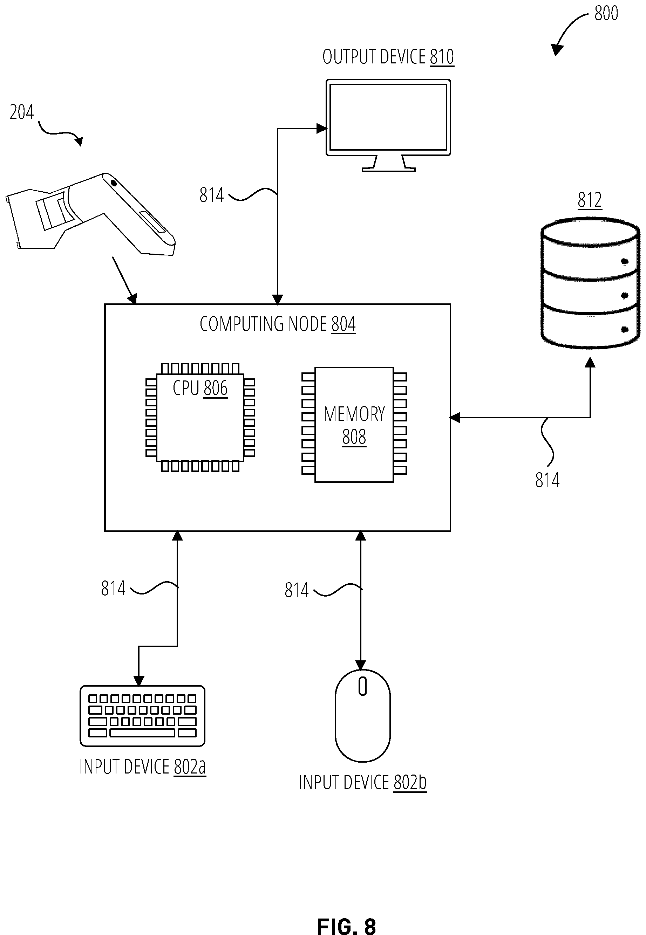

FIG. 8 illustrates a schematic drawing of an example of an apparatus that may be used to implement the method described in FIG. 7 in accordance with an example embodiment of the present disclosure. The apparatus may be part of a cloud computing system. The apparatus may be a mobile computing device. The apparatus may be a stationary computing device.

The apparatus 800 may comprise an input device, such as a keyboard 802a, a mouse 802b, electronic communication devices such as a modem, or a variety of other communication devices. The input device communicates with a computing node 804 of the apparatus. Computing node may refer to any device or system that includes at least one physical and tangible processor 806, and a physical and tangible memory 808 capable of having thereon computer-executable instructions that are executed by the processor. The methods and techniques described above may be implemented on the computing node 804. The apparatus may also include an output device 810, such as the monitor illustrated. Other exemplary embodiments of an output device 810 may include a modem, a printer, or other components known to those skilled in the art. The apparatus 800 may be connected to one or more storage environment(s) 812. The storage environment(s) may store coating material data associated with coating material(s) used to prepare the repaired coating area and/or candidate coating material data associated with candidate coating material(s).

Memory 808 may represent a computer program, where the computer program directs the computer to implement the method and techniques described above. The computer readable medium may be an SD card, a USB storage medium, a floppy disk, a CD-ROM, a DVD, a hard drive, or other devices that are readable by a computer, and that include memory for saving the computer program. In some embodiments, the computer program may be electronically downloaded to the computing node 804, but the downloaded computer program is saved on a tangible device somewhere.

In an exemplary embodiment, the computer program may direct the computing node 804 to request input from the input device. The input may be data associated with the coating material(s) used to prepare the repaired coating area, such as coating material identifier(s) associated with such coating material(s). The computer program may direct the CPU 806 to compare the determined radar signal loss data with given radar signal loss threshold(s) as described in FIG. 7. The computer program may direct the CPU 806 to determine target coating material data associated with target coating material(s) as described in the context of FIG. 7. The CPU 806 may access calculations and data for the determination from memory 808 or storage environment(s) 812. The computer program may direct the output device 810 to present one or more of (a) the result of the comparison of the determined radar signal loss data with the radar signal loss threshold(s), (b) generated message data, and/or (c) target coating material data as described in the context of FIG. 7, or other information as mentioned above.

The present disclosure has been described in conjunction with preferred embodiments and examples as well. However, other variations can be understood and effected by those persons skilled in the art and practicing the claimed invention, from the studies of the drawings, this disclosure and the claims.

Any steps presented herein can be performed in any order. The methods disclosed herein are not limited to a specific order of these steps. It is also not required that the different steps are performed at a certain place or in a certain computing node of a distributed system, i.e. each of the steps may be performed at different computing nodes using different equipment/data processing.

As used herein "determining" also includes "initiating or causing to determine", "generating" also includes "initiating and/or causing to generate" and "providing" also includes "initiating or causing to determine, generate, select, send and/or receive". "Initiating or causing to perform an action" includes any processing signal that triggers a computing node or device to perform the respective action.

In the claims as well as in the description the word "comprising" or "including" or similar wording does not exclude other elements or steps and shall not be construed limiting to the elements or steps lined out. The indefinite article "a" or "an" does not exclude a plurality. A single element or other unit may fulfill the functions of several entities or items recited in the claims. The mere fact that certain measures are recited in the mutual different dependent claims does not indicate that a combination of these measures cannot be used in an advantageous implementation or further elements may be included.

Providing in the scope of this disclosure may include any interface configured to provide data. This may include an application programming interface, a human-machine interface such as a display and/or a software module interface. Providing may include communication of data or submission of data to the interface, in particular display to a user or use of the data by the receiving entity.

## Claims

1. A measurement system for measuring a radar transmission and/or reflection of at least a part of a vehicle part comprising a coating, in particular a repaired coating area, the measurement system comprising:
- a handheld device comprising a housing, wherein the housing includes
• an integrated positioning adjustment mechanism for adjusting the position of the radar target on the vehicle part, wherein the housing further includes
• a radar transmitter that emits a diverging beam of electromagnetic waves having a wavelength of 1 to 20 mm along a transmission path to the vehicle component,
• a radar receiver configured to measure the electromagnetic waves reflected from a radar target along a return path,
• a processor connected to the radar transmitter and the radar receiver, wherein the processor is configured to determine a radar signal loss due to the coating based on the portion of the electromagnetic waves measured by the radar receiver.
- a radar target to which the diverging beam of electromagnetic waves from the handheld device is directed, wherein the radar target comprises a mounting mechanism for detachably mounting the radar target to the vehicle part such that the vehicle part is located between the handheld device and the radar target and wherein the radar target is configured to reflect the directed beam of electromagnetic waves to the return path passing back through the vehicle component or configured to absorb the directed beam of electromagnetic waves.

2. The measurement system of claim 1, wherein the integrated positioning adjustment mechanism of the handheld device is configured to position the radar target behind the vehicle part comprising the coating.

3. The measurement system of claim 1 or 2, wherein the positioning adjustment mechanism integrated into the housing of the handheld device comprises one or more electromagnet(s).

4. The measurement system of any one of claims 1 to 3, wherein the radar transmitter emits the electromagnetic waves in a frequency range of 20 GHz to 200 GHz, in particular at a frequency range of 20 GHz to less than 74 GHz or a frequency range of 74 GHz to 85 GHz or a frequency range of 100 to 150 GHz.

5. A method for measuring a radar transmission and/or reflection of at least a part of a vehicle part comprising a coating, in particular comprising a repaired coating area, the method comprising:
- preparing the coating by applying at least one coating material to at least a part of the vehicle part,
- providing a measurement system of any one of claims 1 to 4 comprising a radar target and a handheld device,
- positioning the radar target of the measurement system at the surface of the vehicle part located on the opposite side of the coating by means of a mounting mechanism of the radar target,
- adjusting the position of the radar target on the surface of the vehicle part by means of a positioning adjustment mechanism integrated into the housing of the handheld device of the measurement system such that the radar target is present on the opposite side of the handheld device,
- determining radar signal loss data associated with the presence of the coating, in particular the repaired coating area, on the vehicle part by measuring radar transmission through and/or radar reflection from the vehicle part comprising the coating, in particular the repaired coating area, with the handheld device,
- providing the measured radar loss signal data.

6. The method of claim 5, wherein determining the radar signal loss data includes
- directing the diverging beam of electromagnetic waves having a wavelength of 1 to 20 mm from a radar transmitter of the handheld device along the transmission path towards the radar target,
- measuring a portion of the electromagnetic waves reflected from the radar target along the return path with a radar receiver of the handheld device, and
- determining the radar signal loss data by a processor of the handheld device based on the portion of the electromagnetic waves measured by a radar receiver of the handheld device.

7. The method of claim 5 or 6, wherein the radar signal loss data is determined as a percentage of electromagnetic waves emitted by the radar transmitter of the handheld device or wherein the radar signal loss data is determined as a percentage of the electromagnetic waves measured by the radar receiver and a reference radar signal.

8. The method of any one of claims 5 to 7, wherein the radar loss signal data is determined at a frequency range of 20 GHz to 200 GHz, in particular at a frequency range of 20 GHz to less than 74 GHz or a frequency range of 74 GHz to 85 GHz or a frequency range of 100 to 150 GHz.

9. The method of any one of claims 5 to 8, further including a step of validating an orientation of the radar target with respect to the handheld device, in particular with respect to the radar transmitter and/or radar receiver included in the handheld device.

10. The method of claim 9, wherein the orientation of the radar target with respect to the handheld device is validated by measuring a field strength of a magnetic field produced by electromagnet(s) of the positioning adjustment mechanism integrated into the housing of the handheld device and/or by measuring the strength of the emitted electromagnetic waves measured by the radar receiver.

11. The method of claim 9 or 10, wherein the orientation of the radar target is validated if the radar target is oriented in a 90 degree angle with respect to the emitted radar signal.

12. The method of any one of claims 9 to 11, wherein the position of the radar target on the surface of the vehicle is adjusted by means of the position adjustment mechanism integrated into the housing of the handheld device if the orientation of the radar target is not validated.

13. The method of any one of claims 5 to 12, further including steps of
- providing coating material data associated with one or more coating material(s) applied to the vehicle part, wherein the coating material data includes color data and radar signal loss threshold(s) and/or reflection threshold(s),
- comparing the determined radar signal loss data with the provided radar signal loss threshold(s).

14. The method of claim 13, wherein target coating material data associated with target coating material(s) is determined based on the provided coating material data if the determined radar signal loss data is below the provided threshold(s).

15. Use of the measurement system of any one of claims 1 to 4 for measuring a radar transmission and/or reflection of at least a part of a vehicle part comprising a coating, in particular a repaired coating.
